(19)

Europäisches
Patentamt
European
Patent Office
Office européen
des brevets

(11) **EP 2 330 539 A1**

(12) **EUROPEAN PATENT APPLICATION**
published in accordance with Art. 153(4) EPC

(43) Date of publication:
08.06.2011 Bulletin 2011/23

(21) Application number: 09813089.1

(22) Date of filing: 09.09.2009

(51) Int Cl.:
*G06K 19/07* (2006.01)     *G06K 19/077* (2006.01)
*G09F 9/00* (2006.01)     *H01M 14/00* (2006.01)

(86) International application number:
**PCT/JP2009/065746**

(87) International publication number:
**WO 2010/029943 (18.03.2010 Gazette 2010/11)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **10.09.2008 JP 2008232679
10.09.2008 JP 2008232680
11.09.2008 JP 2008233892
19.01.2009 JP 2009009193**

(71) Applicant: **Panasonic Electric Works Co., Ltd.
Kadoma-shi, Osaka 571-8686 (JP)**

(72) Inventors:
• **SEKIGUCHI, Takashi
Kadoma-shi
Osaka 571-8686 (JP)**
• **YAMAKI, Takeyuki
Kadoma-shi
Osaka 571-8686 (JP)**

(74) Representative: **Appelt, Christian W.
Forrester & Boehmert
Pettenkoferstrasse 20-22
80336 München (DE)**

(54) **RADIO IDENTIFICATION CARD**

(57)     The wireless identification card (10) includes an identification information storage (11) configured to store identification information, and a transmitter (12) configured to transmit, to a reader (90), a wireless signal including the identification information stored in the identification information storage (11). The wireless identification card (10) further includes a solar cell (15) configured to supply electrical power to the transmitter (12). The solar cell (15) includes a sensitizing material having sensitization action, a semiconductor layer (1513) defined as an electron transport member, and an electrolyte layer (1514) defined as a hole transport member.

FIG. 1A

EP 2 330 539 A1

FIG. 1B

**Description**

**Technical Field**

The present invention is directed to wireless identification cards, and particularly to a wireless identification card incorporating a battery for wireless communication.

**Background Art**

In recent years, a contactless identification system has become common. The contactless identification system includes a thin wireless identification card which is portable for a user, and a reading device (reader) which communicates with the wireless identification card to retrieve identification information from the wireless identification card. The contactless identification system judges whether or not the user is allowed to pass through an automatic ticket checker or a gate, on the basis of the identification information retrieved from the wireless identification card.

As the wireless identification card, a passive wireless identification card and an active wireless identification card have been provided. The passive wireless identification card is provided with no battery supplying electrical power for a wireless communication. An example of the passive wireless identification is a passive RF tag (passive tag). The active wireless identification card is provided with a battery supplying electrical power for a wireless communication. An example of the active wireless identification is an active RF tag (active tag).

The passive wireless identification card has a relatively short communication range within which the passive wireless identification card is enabled to communicate with the reading device. Therefore, a user is required to place the passive wireless identification card close to the reading device.

In contrast, the active wireless identification card has the communication range greater than that of the passive wireless identification card. For example, even when a distance between the active wireless identification card and the reading device is 10m, the active wireless identification card can communicate with the reading device. Thus, when the wireless identification card is the active one, the user need not place the wireless identification card close to the reading device, but is only required to move close to the reading device.

However, if a battery of the active wireless identification card is a primary cell, a user is required to perform a regular maintenance (e.g., battery exchange).

To adopt a solar cell in order to eliminate battery exchange is disclosed in Japanese Patent Publication Laid-Open No. 2004-24551.

The passive wireless identification card provided with a liquid crystal display panel as an indicating means is disclosed in Japanese Patent Publications Laid-Open No. 2002-32728 and 10-240873. This wireless identification card includes a solar cell configured to supply electrical power to the liquid crystal display panel.

In order to overcome above insufficiency of the active wireless identification card, the present inventors have conceived of adopting a general crystalline silicon solar cell, a polysilicon solar cell, or a compound semiconductor solar cell as a power supply source of the active wireless identification card.

However, it has found that it is difficult to supplement electric power used in the wireless identification card by use of the aforementioned solar cell.

A main reason is that the aforementioned solar cell has no photoelectric conversion performance enough to generate sufficient electrical power in a usage environment of the wireless identification card.

In other words, the wireless identification card is frequently used in doors (rooms). Therefore, light coming into the solar cell is indoor light rather than sunlight. The indoor light is lower in luminance than the sunlight, and is defined as light emitted from a fluorescent lamp, for example. A general crystalline silicon solar cell, a polysilicon solar cell, and a compound semiconductor solar cell can exert sufficient power generation capacity (in other words, photoelectric conversion performance) under the sunlight, but suffer from insufficient power generation capacity under the indoor light. Therefore, the above solar cells may fail to generate electrical power necessitated for operation of the wireless identification card.

It is considered to increase electric power generation by enlarging the solar cell. However, the wireless identification card is desired to have a size convenient for a user to carry the wireless identification card. As mentioned in the above, in view of portability of the wireless identification card, the size of the wireless identification card is limited, and a size of the solar cell is limited, togo. Therefore, it is not preferable to increase the electric power generation by enlarging the solar cell.

**Disclosure of Invention**

In view of the above insufficiency, the present invention has been aimed to propose a wireless identification card which is capable of supplementing consumed power under a low illumination environment (e.g., in doors) by use of only a solar cell of limited size.

The wireless identification card of the present invention includes an identification information storage configured to store identification information, a transmitter configured to transmit a wireless signal including the identification information stored in the identification information storage, and a solar cell configured to supply electrical power to the transmitter. The solar cell includes a sensitizing material having sensitization action, an electron transport member, and a hole transport member.

The present invention can improve electrical power generation under the low illumination environment (e.g. in doors) in contrast to the wireless identification card employing a general crystalline silicon solar cell. Therefore, even if the wireless identification card is frequently used indoors, it is possible to supplement consumed power by use of only the solar cell of limited dimensions. Further, it is possible to reduce a production cost of the solar cell.

In a preferred embodiment, the wireless identification card includes an indication unit shaped into a plate shape and configured to indicate predetermined visual information, a main body shaped into a card shape and configured to hold the identification information storage and the transmitter. The sensitizing material is a dye which generates an electron and a hole in response to reception of light. The solar cell is shaped into a plate shape, and further includes a working electrode, and an opposite electrode. The electron transport member is made of a semiconductor layer and configured to support the sensitizing material. The working electrode is formed over a first surface of the electron transport member in its thickness direction and configured to receive an electron from the sensitizing material. The opposite electrode is formed over a second surface of the electron transport member in its thickness direction. The hole transport member is defined as an electrolyte layer interposed between the electron transport member and the opposite electrode and configured to receive a hole from the sensitizing material. One of the solar cell and the indication unit is configured to have translucency, and disposed over a front surface of the main body such that the other of the solar cell and the indication unit is interposed between the one of the solar cell and the indication unit and the main body.

According to this embodiment, in contrast to a prior art in which the solar cell and the indication unit are arranged in parallel on the same plane, it is possible to enlarge the surface area of each of the solar cell and the indication unit. Accordingly, it is possible to improve the visibility of the indication unit and the electrical power generation of the solar cell. Since the solar cell energizes the communication device and the indication unit, the maintenance (e.g., battery exchange) is unnecessary. With controlling the indication unit to indicate a user's name and/or the like, the wireless identification card can be used as a name tag.

In a more preferred embodiment, the indication unit is configured to have translucency, and is disposed over the front surface of the main body such that the solar cell is interposed between the indication unit and the main body. The wireless identification card includes a diffusion transmission member interposed between the indication unit and the solar cell. The diffusion transmission member is configured to, upon receiving light, diffuse the light used for visual indication by the indication unit, and transmit the light used for electrical generation of the solar cell.

According to this embodiment, since a part of the light passing through the indication unit is diffused by the diffusion transmission member, the visibility of the visual indication of the indication unit can be improved. Further, the solar cell generates electric power by use of the light which passes through the diffusion transmission member. Therefore, both the visual indication by the indication unit and the generation of electric power by the solar cell are realized by use of only the incoming light from one side.

Alternatively, in a more preferred embodiment, the solar cell has translucency for visible light, and is disposed over the main body such that the indication unit is interposed between the solar cell and the main body.

According to this embodiment, the solar module easily receives light in contrast to an instance where the solar cell is disposed in back of the indication unit. Therefore, the electrical power generation of the solar cell can be increased.

In a further preferred embodiment, the indication unit has translucency. The wireless identification card includes a background plate which is disposed over a rear surface of the indication unit and is configured to improve visibility of visual indication by the indication unit.

According to this embodiment, it is possible to improve the visibility of the visual indication of the indication unit. Accordingly, the indication device gives at its indication screen the visual indication which is easily recognized even when it is viewed from a distance.

Alternatively, in a further preferred embodiment, the indication unit has translucency. The wireless identification card includes a reflective plate which is disposed over a rear surface of the indication unit and is configured to reflect the light which passes through the indication unit.

According to this embodiment, the solar cell can make photoelectric conversion by use of light reflected by the reflective plate in addition to light which directly comes into the solar cell. As a result, the electrical power generation of the solar cell can be increased.

Alternatively, in a more preferred embodiment, the wireless identification card further includes a receiver is configured to receive a wireless signal including indication information which defines visual indication indicated by the indication unit, and an indication information storage configured to store the indication information received by the receiver. The indication unit is configured to make visual indication corresponding to the indication information stored in the indication information storage. The solar cell is configured to energize the receiver and the indication unit.

According to this embodiment, it is possible to indicate a desired visual indication by use of the indication unit.

In a further preferred embodiment, the wireless identification card includes an updating device configured to update contents of the indication information stored in the indication information storage to contents of the indication information received by the receiver.

According to this embodiment, it is possible to update the visual indication made by the indication unit.

Alternatively, in a more preferred embodiment, the indication unit is disposed over the front surface of the may body such that the solar cell is interposed between the indication unit and the main body. The solar cell is defined by common base plate, and a photoelectric conversion member formed over the common base plate, the photo electric conversion member including the working electrode, the semiconductor layer, the electrolyte layer, and the opposed electrode. The transmitter is defined by the common base plate, an antenna formed over the common base plate, and a communication circuit formed over the common base plate and configured to transmit a wireless signal by use of the antenna.

According to this embodiment, it is possible to thin the wireless identification card.

In a more preferred embodiment, the photoelectric conversion member, the antenna, and the communication circuit are formed over a surface of the common base plate in its thickness direction.

According to this embodiment, in contrast to the wireless identification card in which the photoelectric conversion member, the antenna, and the communication circuit are formed over the different surfaces of the common base plate, it is possible to thin the wireless identification card.

Alternatively, in a more preferred embodiment, the photoelectric conversion member is formed over a first surface of the common base plate in its thickness direction. The antenna and the communication circuit are formed over a second surface of the common base plate in its thickness direction.

According to this embodiment, in contrast to the wireless identification card in which the photoelectric conversion member, the antenna, and the communication circuit are formed over the same surface of the common base plate, it is possible to downsize the wireless identification card.

Alternatively, in a more preferred embodiment, the wireless identification card further includes a storage cell configured to store electrical power generated by the solar cell. The storage cell is defined by the common base plate and a storage cell member formed over the common base plate.

According to this embodiment, even if the solar cell fails to supply sufficient electrical power to the communication circuit due to a decrease in an amount of light coming into the solar cell, the communication circuit can operate by receiving electrical power from the storage cell.

Alternatively, in a more preferred embodiment, the indication unit is disposed over the front surface of the may body such that the solar cell is interposed between the indication unit and the main body. The solar cell is defined by a photoelectric conversion member and a reflector, the photoelectric conversion member being defined by the working electrode, the semiconductor layer, the electrolyte layer, and the opposed electrode, and the reflector being configured to reflect light which passes through the photoelectric conversion member. The transmitter is defined by a base plate, an antenna formed over the base plate, and a communication circuit formed over the base plate and configured to transmit a wireless signal by use of the antenna. The reflector is the base plate or the antenna.

According to this embodiment, it is possible to increase the electrical power generation of the solar cell, and further to thin the wireless identification card.

Alternatively, in a more preferred embodiment, the wireless identification card further includes a storage cell configured to store electrical power generated by the solar cell. The indication unit is disposed over a front surface of the solar cell. The solar cell is defined by a common base plate and a photoelectric conversion unit formed over the common base plate and including the working electrode, the semiconductor layer, the electrolyte layer, and the opposed electrode. The storage cell is defined by the common base plate and a storage cell member formed over the common base plate.

According to this embodiment, it is possible to downsize the wireless identification card. Additionally, even if the solar cell fails to supply sufficient electrical power to the communication circuit due to a decrease in an amount of light coming into the solar cell, the communication circuit can operate by receiving electrical power from the storage cell. Further, since the solar cell and the storage cell are provided as a single part, it is possible to decrease the number of parts for assembling the wireless identification card.

**Brief Description of Drawings**

FIG. 1A is a block diagram illustrating a wireless identification card of the first embodiment,
FIG. 1B is a schematic cross sectional view illustrating a solar cell of the above wireless identification card,

FIG. 2 is a block diagram illustrating a contactless identification system using the above wireless identification card,

FIG. 3A is a perspective view illustrating the wireless identification card of the first embodiment,

FIG. 3B is an exploded perspective view illustrating the wireless identification card of the first embodiment,

FIG. 4A is a chemical formula of the dye (K19) used in the above solar cell,

FIG. 4B is a chemical formula of the dye (K77) used in the above solar cell,

FIG. 4C is a chemical formula of the dye (Z907) used in the above solar cell,

FIG. 5A is a chemical formula of the other dye used in the above solar cell,

FIG. 5B is a chemical formula of the other dye used in the above solar cell,

FIG. 6 is an explanatory view illustrating a usage example of the above wireless identification card,

FIG. 7 is an exploded perspective view illustrating a modification of the above wireless identification card,

FIG. 8A is an exploded perspective view illustrating a modification of the above wireless identification card,

FIG. 8B is an explanatory view illustrating a usage example of the above wireless identification card,

FIG. 9 is a perspective view illustrating a modification of the above wireless identification card,

FIG. 10A is an exploded perspective view illustrating a wireless identification card of the second embodiment,

FIG. 10B is a schematic cross sectional view illustrating the wireless identification card of the second embodiment,

FIG. 11 is a partially omitted schematic cross sectional view illustrating a wireless identification card of the third embodiment,

FIG. 12A is a schematic cross sectional view illustrating a transmission unit of a reference of the above wireless identification card,

FIG. 12B is a schematic cross sectional view illustrating a solar cell of the reference of the above wireless identification card,

FIG. 12C is a partially omitted schematic cross sectional view illustrating the reference of the above wireless identification card,

FIG. 13 is a partially omitted schematic cross sectional view illustrating a modification of the wireless identification card,

FIG. 14A is a schematic cross sectional view illustrating a transmission unit of a reference of the above wireless identification card,

FIG. 14B is a schematic cross sectional view illustrating a solar cell of the reference of the above wireless identification card,

FIG. 14C is a partially omitted schematic cross sectional view illustrating the reference of the above wireless identification card,

FIG. 15 is a partially omitted schematic cross sectional view illustrating a wireless identification card of the fourth embodiment,

FIG. 16A is a schematic cross sectional view illustrating a solar cell of a reference of the above wireless identification card,

FIG. 16B is a schematic cross sectional view illustrating a storage cell of the reference of the above wireless identification card,

FIG. 16C is a partially omitted schematic cross sectional view illustrating the reference of the above wireless identification card,

FIG. 17 is a partially omitted schematic cross sectional view illustrating a modification of the above wireless identification card,

FIG. 18A is an exploded perspective view illustrating a wireless identification card of the fifth embodiment,

FIG. 18B is an exploded perspective view illustrating a modification of the above wireless identification card,

FIG. 19 is an exploded perspective view illustrating a reference of the above wireless identification card,

FIG. 20A is a block diagram illustrating a wireless identification card of the sixth embodiment,

FIG. 20B is a block diagram illustrating an authentication device constructing an entrance and exit management system in association with the above wireless identification card,

FIG. 21 is a schematic diagram illustrating an application of the entrance and exit management system using the above wireless identification card, and

FIG. 22 is a flow chart illustrating operation of a mode control device of the above.

**Best Mode for Carrying Out the Invention**

**(FIRST EMBODIMENT)**

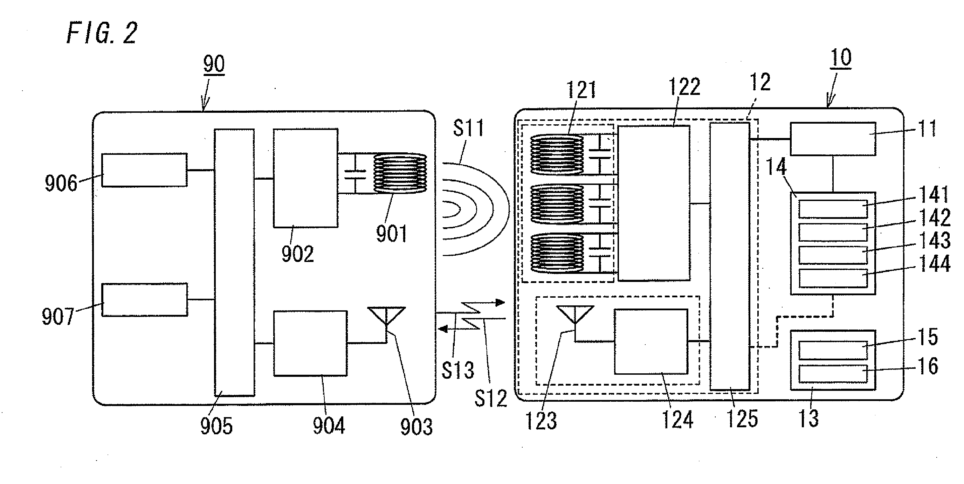

FIG. 2 shows a contactless identification system employing a wireless identification card **10** of the present embodiment. The contactless identification system includes the wireless identification card **10** and a dedicated reading device (reader) **90** configured to establish contactless communications (wireless communications) with the wireless identification card **10.** For example, the contactless identification system is used to make personal authentication by means of the contactless communications between the wireless identification card **10** and the reading device **90,** at an entrance door, an exit door, and an automatic door of premises, and an automatic ticket gate. This contactless identification system only requires a user to have the wireless identification card **10** in order to make an entrance and exit management for a room.

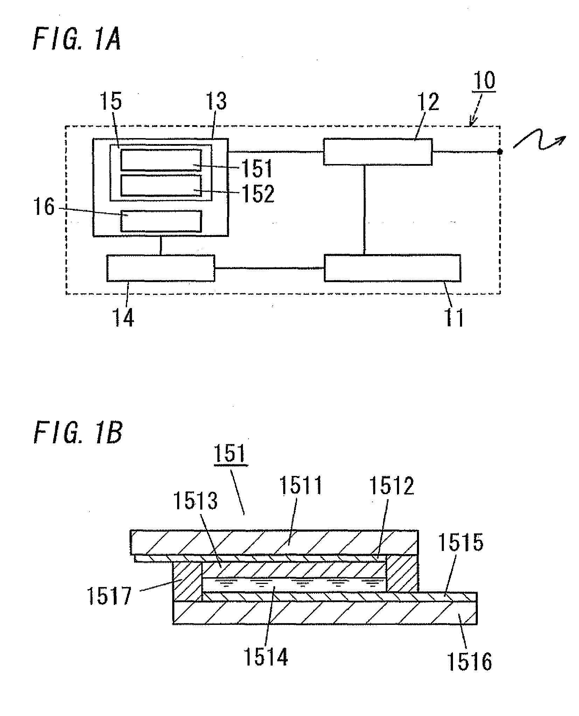

The wireless identification card 10 is, as shown in FIG. 1A, defined as a flat contactless identification device including an identification information storage **11,** a communication device **12,** a power supply device **13,** and an indication device **14.**

The identification information storage **11** is realized by a memory, for example. The identification information storage **11** is configured to store the identification information. For example, the identification information is defined as information for identifying a person who has the wireless identification card **10.** Alternatively, the identification information may be defined as information for identifying the wireless identification card **10.** Besides, the identification information storage **11** is not limited to a memory, but may be a dip switch or other storage devices.

The communication unit **12,** as shown in FIG. 2, includes LF antennas **121** and an LF reception circuit **122.** The LF reception circuit **122** is defined as a communication circuit configured to communicate with the reading device **90** by use of the LF antennas **121** in a first communication manner (LF) using an LF band (low-frequency band: 30 to 300 kHz). Further, the communication unit **12** includes an RF antenna **123** and an RF communication circuit **124.** The RF communication circuit **124** is defined as a communication circuit configured to communicate with the reading device **90** by use of the RF antenna **123** in a second communication manner (UHF) using a UHF band (ultra high frequency band: 300MHz to 3 GHz). In addition, the communication unit **12** includes a communication control circuit 125 configured to control the LF reception circuit **122** and the RF communication circuit **124.** The LF antennas **121** are loop antennas formed over a mounting substrate of a main body 20 which is used as a substrate for forming the communication device **12,** for example. The RF antenna **123** is a patch antenna formed over the mounting substrate of the main body **20,** for example.

The communication device **12** functions as a transmitter which is configured to transmit, to an external device (e.g., the reading device **90**), a wireless signal including the identification information stored in the identification information storage **11.** Further, the communication unit **12** functions as a receiver which is configured to receive, from an external device (e.g., a rewriting device), a wireless signal including indication information defining visual indication to be indicated by the indication device **14.** Besides, when the rewriting device communicates with the wireless identification card **10,** authentication by use of the identification information of the wireless identification card may be made.

The indication device **14** is defined as an indication unit configured to indicate predetermined visual information (an information indicating means for visually indicating information). The indication device **14** is shaped into a plate shape. The indication device **14** is, for example, a reflective liquid crystal display, and has translucency. The indication device **14** includes an indication screen **141** which is shaped into a plate shape and has translucency. The indication screen **141** is, for example, a liquid crystal panel. The indication screen **141** may be selected one from an indication panel using electrochromic materials and an indication panel using photochromic materials. The indication device **14** includes an indication information storage **142** configured to indication information received by the communication device **12** being the receiver. The indication information storage **142** is realized by a memory, for example. Additionally, the indication device **14** includes an indication control circuit **143** configured to display, on the indication screen **141,** contents defined by the indication information stored in the indication information storage **142.** In brief, the indication control circuit **143** controls the contents (visual indication on the indication screen **141**) to be indicated on the indication screen **141.** Moreover, the indication device **14** includes an updating device **144** configured to update contents of the indication information stored in the indication information storage **142** to contents of the indication information received by the communication device **12.**

As described in the above, the indication device **14** is configured to make the visual indication corresponding to the indication information stored in the indication information storage **142.** Upon receiving the indication information from an external device (e.g., the rewriting device), the indication device **14** updates contents to be displayed on the indication screen **141** to contents defined by the received indication information.

Besides, the reading device **90** is installed at an entrance of a room, for example. The reading device **90** includes an LF antenna **901,** an LF transmission circuit **902,** an RF antenna **903,** an RF communication circuit **904,** a control circuit **905,** an indication device **906** being a liquid crystal display, and a buzzer **907.** The LF antenna **901** and the LF transmission circuit **902** constitute a transmitter configured to communication with the wireless identification card **10** in the first communication manner (LF) using the LF band (low frequency band: 30 to 300 kHz). The RF antenna **903** and the RF communication circuit **904** constitute a transceiver configured to communication with the wireless identification card **10** in the second communication manner (UHF) using the UHF band (ultra high frequency band: 300 MHz to 3 GHz). The control circuit **905** is configured to control the LF transmission circuit **902** and the RF communication circuit 904.

Next, an explanation is made to the contactless identification system shown in FIG. 2.

In the reading device **90,** the control circuit **905** creates an activation signal **S11** defined as a wireless signal for activating the wireless identification card **10**. The activation signal S11 is superimposed on a signal component of an inductive magnetic field by the LF transmission circuit **902,** and is amplified. Thereafter, the activation signal **S11** is transmitted from the LF antenna **901**. The activation signal **S11** is transmitted at predetermined intervals (intermittently). The reading device **90** transmits the activation signal **S11** to form an authentication area (an area within which the wireless identification card **10** can receive the activation signal **S11**) around the reading device **90** (e.g., a vicinity of the entrance of the room).

When a user carrying the wireless identification card **10** comes into the authentication area, the wireless identification card **10** receives the activation signal **S11** at the LF antennas **121**. When the LF antennas **121** receive the activation signal **S11,** the LF reception circuit **122** activates the communication control circuit **125**. The communication control circuit **125** creates an identification signal **S12** defined as a wireless signal including the identification information stored in the identification information storage **11**. The identification signal **S12** is transmitted to the reading device **90** in the second communication manner by the RF communication circuit **124** and the RF antenna **125.**

The wireless identification card **10** operates in a low power consumption mode until receiving the activation signal **S11**. The wireless identification card **10** starts to operate in a normal mode upon receiving the activation signal **S11**. In the low power consumption mode, the power supply device **13** supplies electrical power only to the LF reception circuit **122** of the communication device **12**. In the normal mode, the power supply device **13** supplies electrical power to the RF communication circuit **124** and the communication control circuit **125** in addition to the LF reception circuit **122**.

The reading device **90** receives the identification signal **S12** by use of the RF antenna **903** and the RF communication circuit **904.** The received identification signal **S12** is transferred from the control circuit **905** to an upper device (e.g., an authentication device) not shown. The upper device checks the identification information included in the identification signal **S12**. When the identification information is judged to be valid on the basis of the checking result, the upper device determines success of the authentication, and notifies the reading device **90** of the success of the authentication. In this situation, the control circuit **905** in the reading device **90** creates an acknowledge signal (ACK signal) **S13** including the identification information derived from the identification signal **S12**. The acknowledge signal **S13** is transmitted to the wireless identification card **10** by use of the RF communication circuit **904** and the RF antenna **903.**

The control circuit **905** controls the indication device **906** and/or the buzzer **907** to notify the user of the success of the authentication. In addition, the control circuit **905** unlocks the entrance door of the room. By contrast, when the upper device determines failure of the authentication of the identification information, the control circuit **905** controls the indication device **906** and/or the buzzer to warn the user. In this situation, the entrance door of the room is kept locked.

When the RF communication circuit **124** receives the confirmation signal **S13,** the wireless identification card **10** terminates transmitting the identification signal **S12**.

Besides, the reading device **90** may transmit, instead of the acknowledge signal **S13**, the activation signal **S11** including the identification information which has been authenticated by the upper device. With this arrangement, the wireless identification card **10** terminates transmitting the identification signal **S12** when the LF reception circuit **122** receives the activation signal **S11** including the identification information of the wireless identification card **10.**

In the contactless identification system shown in FIG. 2, the wireless identification card **10** activates in response to the activation signal **S11** in the LF band, and transmits the identification signal **S12** in the UHF band. Therefore, the authentication area can be successfully set to extend a predetermined range (e.g., 1.5 to 2 m). The RF communication circuit **124** requires relatively high power consumption of 10 to 20 mA when establishing the wireless communication in the UHF band, while the LF reception circuit **122** can be energized only with slight electrical power in a range of pA order for establishing the wireless communication in the LF band. Thus, by adopting the aforementioned low power consumption mode, it is possible to reduce standby power of the wireless identification card **10.**

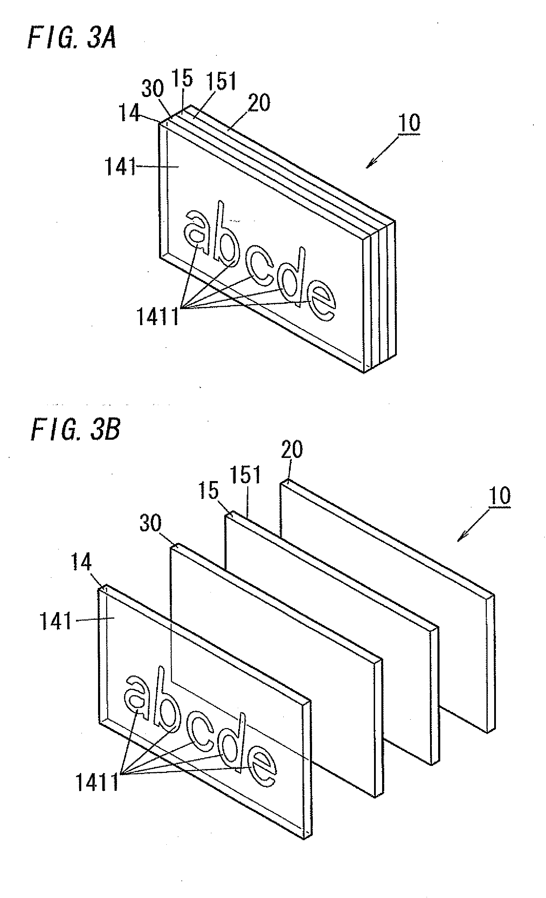

When the communication unit **12** communicates with the external device (rewriting device) not shown and receives the indication information from the external device, the received indication information is stored in the indication information storage **142**. The indication control circuit **143** controls the indication screen **141** in a manner to indicate indication contents (e.g., "abcde" shown in FIG. 3) defined by the indication information stored in the indication information storage **142**. When the communication device **12** receives new indication information from the external device, the updating device **144** updates contents of the indication information stored in the indication information storage 142 to contents of the indication information received at the communication device **12**. Thus, the indication control circuit **143** controls the indication screen **141** to indicate new indication contents instead of the previous indication contents.

In the wireless identification card **10** of the present embodiment, the power supply device **13** configured to energize the communication device **12** and the indication device **14** includes a solar cell **15** and a storage cell **16.**

The solar cell **15** includes a solar cell panel (solar cell module) **151** being a photoelectric conversion element configured to convert optical energy into electrical energy, and an adjustment circuit **152** configured to adjust an output voltage of the solar cell panel **151** to a predetermined value (value suitable for operating the communication device **12** and the indication device **14**). The solar cell module **151** is shaped into a plate shape. The solar cell module **151** is similar in size to the indication screen **141**. The adjustment circuit **152** makes a maximum power point tracking control (MPPT control), for example. In contrast to use of a primary cell, use of the solar cell **15** does not require maintenance (e.g., battery exchange, and battery charge). Therefore, it is possible to successfully make stable power supply for a long time.

The storage cell **16** is a secondary cell or a capacitor. The storage cell **16** is adapted in use to supply electrical power to the communication device **12** and the indication device **14** under a condition where the solar cell **15** fails to receive sufficient light.

The power supply device **13** includes a charging circuit (not shown) configured to charge the storage cell **16** with electrical power output from the solar cell **15** in daytime where the solar cell **15** receives the sufficient light. In brief, the storage cell **16** is charged with the remaining electrical power (surplus power), i.e., the electrical power generated by the solar cell **15** minus the power consumed by the communication device **12** and the indication device **14.** Further, the power supply device **13** includes a discharging circuit (not shown) configured to supply electrical power to the communication device **12** and the indication device **14** from the storage cell **16** when the solar cell **15** sees low electrical power generation. Therefore, even in nighttime where the solar cell **15** receives the insufficient light, the communication device **12** and the indication device **14** are energized. By using the storage cell **16,** it is possible to use, in nighttime, electrical power which was generated by the solar cell **15** in daytime, thus enabling efficient use of the solar cell **15.**

In order to generate sufficient electrical power by the solar cell **15** even in a house (room), the present embodiment employs the solar cell **15** including a material having sensitization action, an electron transport member, and a hole transport member. Each of the electron transport member and the hole transport member is configured to transfer electric charges.

Upon absorption of light, the sensitized material functions to distribute electrons (negative charges) and holes (positive charges) separately to different materials. This function causes a photoelectric conversion effect. The electron transport member (electron transport layer) receives the electrons from the material having the sensitization action, and the hole transport member (hole transport layer) receives the holes from the material having the sensitization action.

The material having the sensitization action is a dye or a quantum dot material, for example. The dye is selected from a ruthenium-cis-diaqua-bipyridyl complex of a $RuL_2(H_2O)_2$ type (herein, L represents 4,4'-dicarboxyl-2,2'-bipyridine), and transition metal complexes of types such as a ruthenium-tris ($RuL_3$) type, a ruthenium-bis ($RuL_2$) type, an osmium-tris ($OsL_3$) type and an osmium-bis ($OsL_2$) type. In addition, the dye can be selected from a zinc-tetra (4-carboxyphenyl) porphyrin, an iron hexacyanide complex, a phthalocyanine, a 9-phenylxanthene dye, a coumarin dye, an acridine dye, a triphenylmethane dye, a tetraphenylmethane dye, a quinone dye, an azo dye, an indigo dye, a cyanine dye, a merocyanine dye, and a xanthene dye, for example. The quantum dot material is selected from a PbS and CdS, for example.

A material of the electron transport member is preferred to be selected from oxidation products of metals (e.g., Cd, Zn, In, Pb, Mo, W, Sb, Bi, Cu, Hg, Ti, Ag, Mn, Fe, V, Sn, Zr, Sr, Ga, Si, and Cr), perovskites (e.g, $SrTiO_3$, and $CaTiO_3$), sulfides (e.g., CdS, ZnS, $In_2S_3$, PbS, $Mo_2S$, $WS_2$, $Sb_2S_3$, $Bi_2S_3$, $ZnCdS_2$, and $Cu_2S$), and metal chalcogenides (e.g., CdSe, $In_2Se_3$, $WSe_2$, HgSe, PbSe, and CdTe). In addition, the material of the electron transport member is preferred to be selected one from GaAs, Si, Se, $Cd_3P_2$, $Zn_3P_2$, InP, AgBr, $PbI_2$, $HgI_2$, and $BiI_3$. Further, the material of the electron transport member is preferred to be selected one from complexes including one or more kinds of materials selected from aforementioned semiconductor materials, such as, $CdS/TiO_2$, CdS/AgI, $Ag_2S/AgI$, CdS/ZnO, CdS/HgS, CdS/PbS, ZnO/ZnS, ZnO/ZnSe. CdS/HgS, $CdS_x/CdSe_{1-x}$, $CdS_x/Te_{1-x}$, $CdSe_x/Te_{1-x}$, ZnS/CdSe, ZnSe/CdSe, CdS/ZnS, $TiO_2/Cd_3P_2$, $CdS/CdSeCd_yZn_{1-y}S$, CdS/HgS/Cds. Besides, the material of the electron transport member is preferred to be selected from organic substances having an electron transport function, and n-type organic materials.

The hole transport member, although not limited by its kind, comprises a solvent which includes a pair of redox-reactive materials, one oxidant and the other reductant. The aforementioned redox-reactive materials are meant to denote a pair of materials in the forms of a reversible oxidant and a reversible reductant. The oxidant is defined as an oxidized electrolyte (e.g., $I_3^-$), and the reductant is defined as a reduced electrolyte (e.g., $I^-$). The hole transport member is selected from a material including p-type semiconductors (e.g., a copper iodide), amine derivatives (e.g., a triphenylamine), conducting polymers (e.g., a polyacetylene, a polyaniline, and a polythiophene), and p-type organic substances.

The solar cell including the material having the sensitization action and charge transport members (the electron transport member and the hole transport member) is a dye-sensitized solar cell, a quantum dot-sensitized solar cell, and a dye-sensitized organic solar cell, for example.

The solar cell **15** of the present embodiment is a dye-sensitized solar cell. As shown in FIG. 1B, the solar cell module **151** of the solar cell **15** includes a first substrate (working electrode substrate) **1511** made of a glass substrate, and a working electrode **1512** being a transparent electrical conductor layer (transparent electrode) which is formed over a surface (rear surface) of the first substrate. In addition, the solar cell module **151** of the solar cell **15** includes a second substrate (opposite electrode substrate) **1516** made of a glass substrate, and an opposite electrode **1515** being a transparent electrical conductor layer (transparent electrode) which is formed over a surface (front surface) of the second substrate. The first substrate **1511** and the second substrate **1516** are arranged such that the working electrode **1512** and the opposite electrode **1515** are faced to each other. Over the working electrode **1512** is formed a semiconductor layer **1513** made of a semiconductor. The semiconductor layer **1513** supports dyes (not shown) which emit electrons in response to reception of light. Further, the semiconductor layer **1513** functions as an electron transport member. Between the working electrode **1513** and the opposite electrode **1515** is interposed a sealing member **1517** which is shaped into a cylindrical shape to surround the semiconductor layer **1513**. A space surrounded by the sealing member **1517** is filled with electrolysis solution forming an electrolyte layer **154** which functions as the hole transport member (reference document 1: Gratzel et al., "Nature" (GB), 1991.10.24, vol. 353, p. 737-740).

As described in the above, the solar cell **15** includes the semiconductor layer **1513,** the working electrode **1512,** the opposite electrode **1515,** and the electrolyte layer **1514**. The semiconductor layer **1513** supports the sensitizing material which is a dye configured to generate an electron and a hole in response to reception of light. The working electrode **1512** is formed over a first surface of the semiconductor layer **1513** in its thickness direction and configured to receive electrons from the sensitizing material. The opposite electrode **1515** is formed over a second surface of the semiconductor layer **1513** in its thickness direction. The electrolyte layer **1514** is interposed between the semiconductor layer **1512** and the opposite electrode **1515** and is configured to receive holes from the sensitizing material.

According to the above configuration, light (e.g., visible light) coming into the solar cell module **151** of the solar cell **15** is directed through the first substrate **1511** and the working electrode **1512,** and is absorbed by the dye in the semiconductor layer **1513**. Thus the dye is excited to emit electrons which move into the semiconductor layer **1513** and passes through a space between the semiconductor particles and reaches the working electrode **1512.** After reaching the working electrode **1512,** the electrons move to the opposite electrode **1515** through a load (e.g., the communication circuit **12**) connected between the working electrode **1512** and the opposite electrode **1515** by way of conducting wires or the like. When receiving the electrons from the reduced electrolyte (reductant) $I^-$ included in the electrolyte layer **1514**, the dye returns back to a ground-level energy state from the excited energy state. The electrolyte (reductant) $I^-$ is oxidized by the electrons supplied to the dye, and becomes the electrolyte (oxidant) $I_3^-$. Upon receiving the electrons from the opposite electrode **1515**, the oxidized electrolyte (oxidant) becomes the reductant $I^-$. Thus, when the solar cell **15** receives the light, an electrical current is supplied from the solar cell **15** to the load (e.g, the communication device **12** and the indication device **14**).

Besides, the first substrate **1511** and the second substrate **1516** made of a transparent material can give translucency to the solar cell module **151** of the solar cell **15**. The first substrate **1511** and the second substrate **1516** made of a flexible plastic film can give flexibility to the solar cell module **151**. Each of the working electrode **1512** and the opposite electrode **1515** is preferred to have high light transmittance. The light transmittance thereof is preferably equal to or more than 50 %, and is more preferably equal to or more than 80 %. The opposite electrode **1515** may be made of a fluorine doped tin oxide, for example. The semiconductor layer **1513** may be made of a porous film comprising minute particles of $TiO_2$ for example. With adopting $TiO_2$ as the semiconductor layer **1513**, it is possible to prevent photodissolution of the semiconductor payer **1513** into the electrolyte layer **1514** and to improve photoelectric conversion performance.

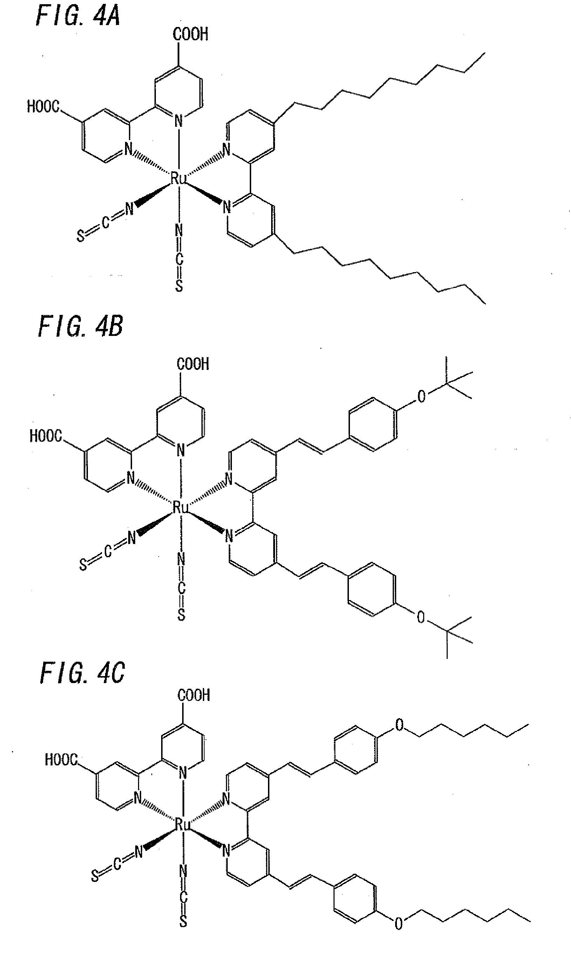

In the solar cell 15, an Ru complex is preferred to be adopted as the dye. Especially, it is preferred to use a high hydrophobic dye, such as K19 shown in FIG. 4A, K77 shown in FIG. 4B, and Z907 shown in FIG. 4C. With use of the highly hydrophobic dye, it is possible to prevent contact of the dye with water, and to suppress removal of the dye caused by hydrolysis. Therefore, durability of the solar cell **15** can be improved.

A concentration of the oxidant $I_3^-$ included in the electrolyte layer **1514** is preferred not to exceed 0.02mol/dm$^3$, because the electrolyte layer **1514** having excessively high concentration of the oxidant absorbs visible light and causes a decrease in power generation efficiency of the solar cell **15**.

Preferably, the concentration of the oxidant $I_3^-$ has its lower limit of 10*10$^{-9}$ mol/dm$^3$. This concentration (10*10$^{-9}$ mol/dm$^3$) is identical to concentration of the oxidant $I_3^-$ which is determined by measuring, base on an absorption photometry, the electrolyte layer **1514** which is made only by addition of a supply source (e.g., an iodide salt) of the reductant $I^-$ to a solvent without the supply source (e.g., an iodine $I_2$) of the oxidant $I_3^-$ being added to the solvent. The following two reasons explain that the concentration of the oxidant $I_3^-$ is approximately 14*10$^{-9}$mol/dm$^3$ regardless of no addition of the supply source of the oxidant $I_3^-$ to the solvent. The first reason is that the oxidant $I_3^-$ is produced from an impurity included in the iodide salt. The second reason is that some equilibration reaction caused by dissolution of the iodide salt in an organic solvent produces the oxidant $I_3^-$.

A solvent adopted for the electrolyte layer **1514** is preferred to be selected one from a gamma-butyrolactone, a polyethylene glycol, a methoxypropionitrile solvent, and the like. Especially, the solvent of the electrolyte layer **1514** is preferred to be selected one from a gamma-butyrolactone, and a polyethylene glycol (molecular weight 200).

Further, the following examples 1 to 3 show a specific example of the solar cell **15**.

### (EXAMPLE 1)

In order to prepare the solar cell **15** of the example 1, first, a first paste used for screen printing is formed by dispersing high-purity titanium oxide powder having an average primary particle diameter of 20 nm into an ethyl cellulose. Further, a second paste used for screen printing is formed by dispersing high-purity titanium oxide powder having an average primary particle diameter of 20 nm and high-purity titanium oxide powder having an average primary particle diameter of 400 nm into an ethyl cellulose.

Next, the above first paste is applied, in a size of 1 cm by 3 cm, onto an electrically conductive glass substrate (available from Asahi glass Co., Ltd, a glass substrate to which electric conductivity is given by a surface coating of a fluorine doped $SnO_2$, surface resistance of 14 $\Omega$/sq, thickness of 1 mm, size of 1.6 cm by 3.6 cm) used as the working electrode **1512** and the first substrate **1511**, and subsequently is dried. After that, the dried first paste is baked in air at 500 °C over 30 minutes. Thereby, the porous titanium oxide film having a thickness of 10 $\mu$m is formed on the electrically conductive glass substrate. Further, the second paste is applied onto the porous titanium oxide film and is dried. Thereafter, the dried second paste is baked in air at 500 °C over 30 minutes. Thereby, the titanium oxide film having a thickness of 4 $\mu$m is formed on the porous titanium oxide film. Thus, the semiconductor layer having a light receiving area of 3 $cm^2$ can be obtained.

Next, the semiconductor layer **1513** is immersed in a solution including dyes (e.g., the dye shown in FIG. 4A). After that, the semiconductor layer **1513** is taken out from the solution, and is kept placed in a dark room at a room temperature over 24 hours. Thus, the dye is adsorbed into the semiconductor layer **1513.** The aforementioned solution is prepared by dissolving the aforementioned dye into an equi-volume mixture by of an acetonitrile and a t-butanol to have a dye concentration of $3*10^{-4}$ mol/$dm^3$.

$H_2PtCl_6$ solution (isopropyl alcohol) having a molar concentration of 5 mmol/$dm^3$ is applied onto an electrically conductive glass substrate (available from Asahi glass Co., Ltd, a glass substrate having electric conductivity by a surface coating of a fluorine doped $SnO_2$ surface resistance of 10$\Omega$/sq, thickness of 1mm, size of 1.6 cm by 3.6 cm) to have a volume per unit area of $5*10^{-6}$ l/$cm^2$, and is heated at 450 °C over 15 minutes. Thereby, the opposite electrode **1515** is formed on the second substrate **1516.**

A thermoplastic resin (available from DuPont Co., Ltd. in the trade name of "Bynel®") which has a thickness of 20 $\mu$m and is used as a basis for the sealing member **1517** is disposed between the first substrate **1511** and the second substrate **1616** to surround the semiconductor layer **1513**. Thereafter, the thermoplastic resin is pressured in its thickness direction over 30 seconds while heated at 250 °C. Thereby, the first substrate **1511** is bonded to the second substrate **1516** by the above thermoplastic resin.

Electrolysis solution is injected, by a depressurization injection method, into an inside of the sealing member **1517** (space between the first substrate **1511** and the second substrate **1516**) via a a 1 mm width hole formed in the sealing member. The electrolysis solution is prepared by dissolving a methyl tripropyl ammonium, an iodine, a lithium iodide, and an N-methylbenzimidazole into a gmma-butyrolactone to have 0.5 mol/$dm^3$ molar concentration of the methyl tripropyl ammonium, 0.005 mol/$dm^3$ molar concentration of the iodine, 0.05 mol/$dm^3$ molar concentration of the lithium iodide, and 0.5 mol/$dm^3$ molar concentration of the N-methylbenzimidazole.

**(EXAMPLE 2)**

The solar cell **15** of the example 2 is different from the solar cell **15** of the example 1 in that electrolysis solution prepared by dissolving iodine to have molar concentration of 0.05 mol/$dm^3$ for the iodine is adopted as the electrolyte layer **1514**, and the other is similar to the solar cell **15** of the example 1.

**(EXAMPLE 3)**

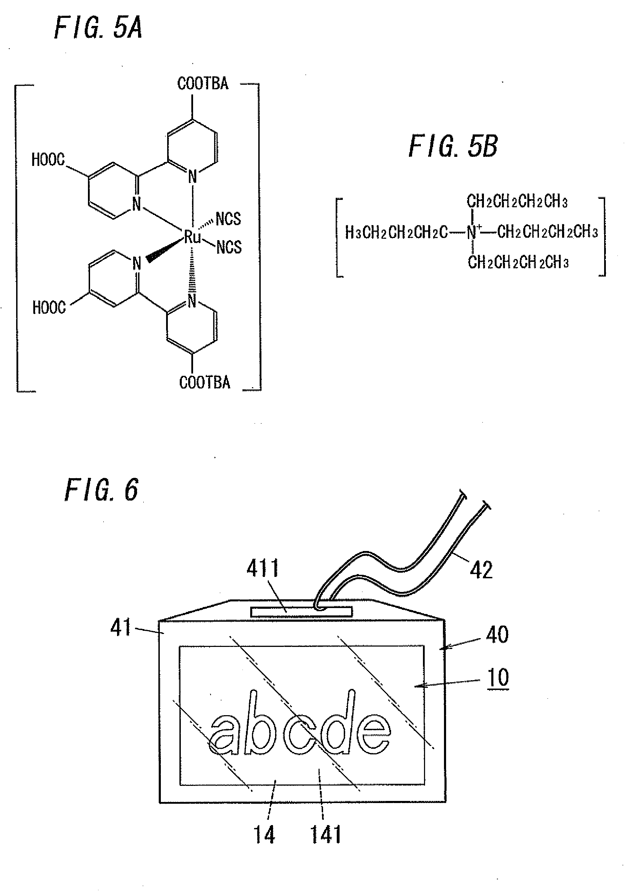

The solar cell **15** of the example 3 is different from the solar cell **15** of the example 1 in that the dye shown in FIG. 5A is adopted, and the other is similar to the solar cell **15** of the example 1. Besides, "TBA" in FIG. 5A denotes a tetrabutylammonium illustrated in FIG. 5B.

With use of the solar cell **15** of each example described in the above, it is possible to generate electric power which is sufficient to operate the communication device **12** and the indication device **14** not only out of doors but also in doors (in a room). Therefore, the solar cell **15** can alone supply electrical power required to communication between the wireless identification card **10** and the reading device **90** or the like.

In a situation where an active type wireless identification card (including no indication device **14**) with a lithium battery CR2032 (button-shaped battery) is applied to the aforementioned contactless identification system, it is reported that a battery life of the wireless identification card is approximately 1 year under a normal use condition. According to a relation of the battery capacity to the battery life, consumed power per day is approximately 1.8 mWh/day. The following table 1 shows results of verification made to each example for evaluation whether or not the solar cell **15** can cover the above consumed power. In the verification, it is supposed that the solar cell is used in doors (room), and that a light source is a fluorescent light. A light receiving amount per day is defined as a light receiving amount of the solar cell when the solar cell **15** is placed over 6 hours under illuminance of 100 lx. The light receiving area of the solar cell **15** is defined as 10 $cm^2$. Further, similar verification was made to a silicon solar cell (crystalline silicon solar cell) as a comparative example.

[Table]

| kinds of solar cells | electrical power generation per day of solar cell having size of 10cm$^2$ (mWh/day) |
|---|---|
| comparative example 1 | 0.09 |
| example 1 | 2.4 |
| example 2 | 2.0 |
| example 3 | 2.0 |

The comparative example **1** can not supplement consumed power per day (1.8 mWh/day) of the wireless identification card **10**. Therefore, the solar cell according to the comparative example **1** needs to be used in cooperation with a primary cell, and a battery life of the solar cell can be prolonged by an extent corresponding to 0.09 mWh/day. The silicone solar cell sees low power generation efficiency under a low illumination environment, and has low sensitivity for light within a particular wavelength band (e.g., light emitted from a fluorescent lamp).

In contrast, each of the examples 1 to 3 has generation power per day which exceeds the consumed power per day (1.8 mWh/day) of the wireless identification card **10**. Therefore, the electrical power generated by the solar cell **15** can alone supplement the power of the wireless identification card **10**. Accordingly, the wireless identification card **10** of the present embodiment can be used successively without maintenance (e.g., battery exchange).

Further, as shown in FIGS. 3A and 3B, the wireless identification card **10** includes the main body **20** to hold the identification information storage **11**, the communication device **12,** and the storage cell **16**.

The main body **20** is made of a dielectric plastic material, and is shaped into a card shape having dimensions proper to carry by a user. The main body **20** has the substantially same dimensions as the solar cell module **151** and the indication screen **141**. The main body **20** is configured to incorporate a mounting substrate (not shown). On the mounting substrate are mounted the identification information storage **11,** the communication device **12,** and the storage cell **16**. Moreover, on the mounting substrate are mounted the indication information storage **142,** the indication control circuit **143,** and the updating device **144** of the indication device **14**.

Over a front surface of the main body 20 are disposed the indication screen **141** of the indication device **14** and the solar cell module **151** of the solar cell **15**. The indication screen **141** is disposed over the front surface of the main body **20** such that the solar cell module **151** is interposed between the indication screen **141** and the front surface of the main body **20**. In brief, the indication screen **141** of the indication device **14** is disposed on a front surface of the solar cell module **151** of the solar cell **15**.

The adjustment circuit **152** of the solar cell **15** mounted on the mounting substrate of the main body **20** and the solar cell module **151** disposed over the front surface of the main body **20** are connected to each other by way of a proper line (not shown) such as one of various cables (e.g., a flexible cable), a terminal, and a patterned conductor. Additionally, the indication information storage **142,** the indication control circuit **143,** and the updating device **144** mounted on the mounting substrate of the main body **20** and the indication screen **141** disposed over the front surface of the main body **20** are connected to each other by use of a proper line (not shown) such as one of various cables (e.g., a flexible cable), a terminal, and a patterned conductor. Further, the power supply device **13** and the indication device **14** are connected to each other by use of a proper line (not shown) such as one of various cables (e.g., a flexible cable).

Besides, the adjustment circuit **152** of the solar cell **15**, and the indication information storage **142,** the indication control circuit **143,** and the updating device **144** of the indication device **14** need not be mounted on the mounting substrate of the main body **20**. The adjustment circuit **152** may be integrated with the solar cell module **151**. Further, the indication information storage **142,** the indication control circuit **143,** and the updating device **144** may be integrated with the indication screen **141**.

Further, the wireless identification card **10** of the present embodiment includes a diffusion transmission member (diffusion transmission layer) **30** interposed between the indication screen **141** of the indication device **14** and the solar cell module **151** of the solar cell **15**.

The diffusion transmission member **30** is configured to, upon receiving light, diffuse the light used for visual indication by the indication unit **14** (the light used in the indication part **1411**), and transmit the light used for electrical generation of the solar cell **15**. For example, the diffusion transmission member **30** is a panel (opalescent panel) in the form of a panel made of an opalescent plastic material having translucency.

As mentioned in the above, in the wireless identification card **10**, the indication device **14** (indication screen **141**), the diffusion transmission member **30,** the solar cell **15** (solar cell module **151**), and the main body **20** are laminated in this order from a front side of the wireless identification card **10**.

Accordingly, the light coming into the wireless identification card **10** from a visible side (front side) thereof is directed through the indication screen **141** of the indication device **14** having translucency and reaches the diffusion transmission member **30.** A part of the light which reached the diffusion transmission member **30** is diffused by the diffusion transmission member **30**, and the rest is directed through the diffusion transmission member **30** and reaches the solar cell module **151** of the solar cell **15.**

The wireless identification card **10** of the present embodiment can improve the electrical power generation under the low illumination environment (e.g. in doors) in contrast to the wireless identification card employing a general crystalline silicon solar cell. Therefore, even if the wireless identification card **10** is frequently used indoors, it is possible to supplement consumed power by use of only the solar cell **15** of limited dimensions. Further, it is possible to reduce a production cost of the solar cell **15.** As described in the above, since the solar cell **15** energizes the communication device **12** and the indication device **14,** the maintenance (e.g., battery exchange) is unnecessary.

Further, in the wireless identification card **10,** the indication device **14** and the solar cell **15** are attached to the front surface of the main body 20 such that the indication device **14** is superimposed on the solar cell **15** in a forward/ rearward direction. Therefore, in contrast to a prior art in which the solar cell **15** and the indication device **14** are arranged in parallel in the same plane (the front surface of the main body **20**), it is possible to enlarge the surface area of each of the solar cell **15** and the indication device **14.** Accordingly, it is possible to improve the visibility of the indication device **14** and the electrical power generation of the solar cell **15.** Further, it is possible to increase an amount of information which is displayed on the indication screen **141** at a time.

Since a part of the light passing through the indication device **14** is diffused by the diffusion transmission member **30,** the visibility of the visual indication of the indication device **14** can be improved. Further, the solar cell **15** generates electric power by use of the light which is directed through the diffusion transmission member **30.** Therefore, the incoming light from one side (front side) enables both the visual indication by the indication device **14** and the generation of electric power by the solar cell **15.**

Further, since the indication information storage **142** stores the indication information received from the external device, the visual indication is kept indicated even if the communication with the eternal device is completed. Therefore, the wireless identification card need not communicate with the external device many times in order to indicate the same visual indication. In addition, upon receiving the indication information different in contents from the present indication information, the wireless identification card **10** makes the visual indication based on the received indication information. In brief, it is possible to update, in response to reception of new indication contents, current indication contents to the new indication contents.

In the indication device **14,** the indication screen **141** may be configured to hold the indication contents by keep indicating the same indication contents. That is, the indication screen **141** may be configured to function as the indication information storage **142.** The above indication screen **141** may be an electronic paper. The electronic paper can make successive visual indication without power supply. Therefore, with adopting the electronic paper as the indication screen **141,** it is possible to keep indicating the visual indication even if the communication with the external device is completed. Therefore, the wireless identification card need not communicate with the external device many times in order to indicate the same visual indication. Further, since the electronic paper can keep making the visual indication even if power supply thereto is terminated, it is possible to reduce consumed power. Besides, a memory-effect liquid crystal panel (e.g., a cholesteric liquid crystal) can be used instead of the electronic paper.

In the above wireless identification card **10,** the indication device **14** which can change the visual indication is adopted as the indication unit. However, as the indication unit is adopted a visual indication plate. The visual indication plate is a printed material prepared by printing visual information destined to be transmitted such as letters and graphics (e.g., "abcde") on a surface of a paper or a resin molded article. When the indication plate is used instead of the indication device **14,** it is unnecessary to supply electrical power from the solar cell **15** and/or the storage cell **16.**

In the wireless identification card **10** of the present embodiment, the solar cell **15** is adopted as the power source. Thus, a user is required to carry the wireless identification card **10** such that the solar cell **15** receives light because any solar cell 15 cannot generate sufficient power in a situation where the wireless identification card **10** cannot receive sufficient light (e.g, a situation where the wireless identification card **10** is placed in a pocket of clothes, a bag, and a drawer). However, if the solar cell **15** of the wireless identification card **10** should force the user to orient it in a direction of receiving the light, it would greatly hamper convenience of an active tag which is inherently unnecessary to hold the wireless identification card **10** over the reading device **90.** Thus, in order to use effectively, as the power source, the solar cell **15** mounted on the wireless identification card **10,** the solar cell **15** is preferred to receive light in a normal use of the wireless identification card **10.**

In view of the above, as shown in FIG. 6, the wireless identification card **10** is preferred to be applied to a name tag **40,** for example.

In the wireless identification card **10**, the indication device **14** and the solar cell **15** are disposed over the front surface of the main body **20.** Thus, when a user carries the wireless identification card **10** such that the indication screen **141** of the indication device **14** is easily visible to people around (when a user carries the wireless identification card 10 so as to show the indication device **14** to people around), light coming into the indication device **14** is directed through the indication device **14** and the diffusion transmission member 30 and reaches the solar cell **15.** Consequently, the solar cell of the wireless identification card 10 can successfully receive the light without a particular need of being oriented towards the light.

When the wireless identification card **10** is adopted as the name tag **40,** the indication contents of the indication screen **141** is an owners name, and/or an owner's position (a department name), for example. If the owner or the owner's position is changed, the new indication information is transmitted from the external device to the wireless identification card **10** to update the indication contents of the indication screen **141.**

In this arrangement, in view of portability, a thickness of the wireless identification card **10** is preferred not to exceed 10 mm. Especially, in view of attaching it to clothes, the thickness of the wireless identification card **10** is preferred not to exceed 5 mm. Further, in view of the same usability (portability) as that of a nameplate of a conventional name tag or a credit card, the thickness of the wireless identification card **10** is preferred not to exceed 2 mm. In view of carrying it long time, a weight of the wireless identification card **10** is preferred not to exceed 200g. In view of attaching it to clothes, the weight of the wireless identification card **10** is preferred not to exceed 100 g.

The name tag **40** includes a case **41** in the form of a flat plate made of a transparent material and is configured to house the wireless identification card **10**. The case **41** is provided at its upper end with a through hole **411** adapted in use to pass a neck strap (cord) 42 which is used for dangling the case **41** from one's neck.

Accordingly, the user can wear the neck strap **42** around one's neck to carry the wireless identification card **10** by dangling the same from one's neck. In this situation, the wireless identification card **10** is disposed on the user's clothes. Besides, the wireless identification card **10** need not be dangled from one's neck by use of the neck strap **42.** For example, the wireless identification card **10** may be attached to the user's clothes by use of a pin, a hook, or a cord. The wireless identification card **10** may be fixed to the user's clothes by use of integrating the wireless identification card **10** with the user's clothes, of sticking the wireless identification card **10** on the user's clothes, or of sewing the wireless identification card 10 on the user's clothes.

As described in the above, with controlling the indication device **14** to indicate a user's name, the user's position (department name), and/or the like, the wireless identification card **10** can be used as a name tag. In addition, the indication device **14** can be easy to change its indication contents each change in an owner or owner's post. The name tag employing the wireless identification card **10** is more convenient than a paper name tag. Especially, in a situation the name tag is used as a guest's name tag, the name tag employing the wireless identification card **10** is more convenient than a paper name tag because "name" as the indication contents is easily changed in association with a guest.

Besides, the wireless identification card **10** may be applied to a shoulder mark, an arm badge, a cross brace, a badge, a tag, and the like.

Alternatively, the wireless identification card **10** is used in a terminal for explanation of an exhibit in a gallery or a museum, for example.

In the past, an explanation to an exhibit is described on a front surface of an explanation panel which is placed on a wall in a vicinity of the exhibit, for example. Therefore, a visitor has to come in front of the explanation panel to read the explanation to the exhibit. However, when many visitors are in a museum (when a museum is crowded), it is difficult for a visitor to come in front of the explanation panel to read the explanation.

The above problem can be solved by use of the wireless identification card **10** as a terminal for an explanation to an exhibit. First, a visitor receives the wireless identification card **10** when entering the museum. Above the exhibit is disposed an external device which is configured to transmit the visual indication information having the indication contents defining an explanation to the corresponding exhibit. Consequently, when the visitor comes close to the exhibit in the museum, the wireless identification card **10** carried by the visitor receives the visual indication information from the external device, and controls the indication screen **141** to display the indication contents (explanation to the exhibit) defined by the received visual indication information. When the visitor comes close to another exhibit, the wireless identification card **10** receives the visual indication information from another external device, and controls the indication screen **141** to display the indication contents (explanation to another exhibit) defined by the received visual indication information.

Therefore, with use of the wireless identification card **10,** a visitor can easily read the explanation to the exhibit in contrast to use of the explanation panel.

The aforementioned wireless identification card **10** may be applied to the contactless identification system which requires personal authentication to activate an engine of a car, a computer, various equipment devices, or the like. For example, in a situation where the reading device **90** is placed at an entrance of a managed area with an unspecified number of visitors, and only an authorized visitor (who has an appointment) is given the wireless identification card 10 in advance, it is possible to identify the authorized user and allow the same to enter the managed area, independently of whether they are acquainted. In a situation where an act in a group is required in a care facility, a school, a company, a group tour, or the like, with providing the wireless identification card **10** to each person, it is possible to check existence for each person without calling over.

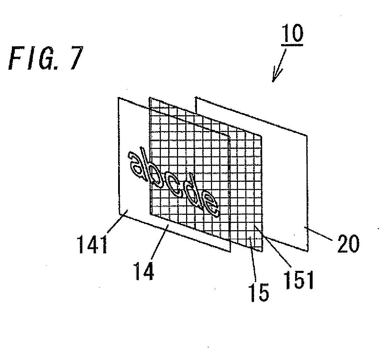

FIG. 7 shows a modification of the wireless identification card **10** of the present embodiment. The modification illustrated in FIG. 7 includes no diffusion transmission member **30.** In brief, in a situation where the wireless identification card **10** devoid of the diffusion transmission member **30** has the enough visibility of the indication device **14,** the wireless identification card **10** need not be provided with the diffusion transmission member **30**.

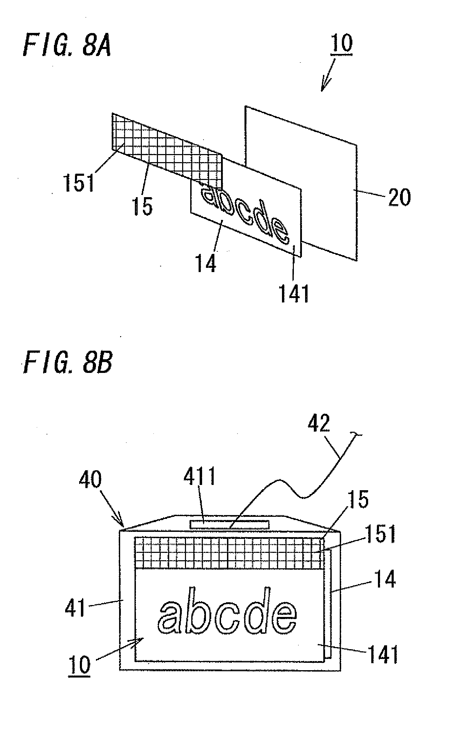

FIGS. 8A and 8B show a modification of the wireless identification card **10** of the present embodiment. In the modification illustrated in FIGS. 8A and 8B, the solar cell **15** and the indication device **14** are arranged in a common plane (on the front surface of the main body **20**).

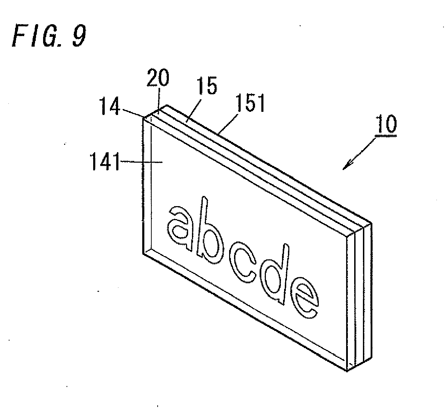

FIG. 9 shows a modification of the wireless identification card **10** of the present embodiment. In the modification illustrated in FIG. 9, the indication screen **141** of the indication device **14** is disposed on the front surface of the main body, and the solar cell module **151** of the solar cell **15** is disposed on a rear surface of the main body **20**. In this modification, the solar cell **15** generates electric power by use of light coming from a rear side of the wireless identification card **10**.

**(SECOND EMBODIMENT)**

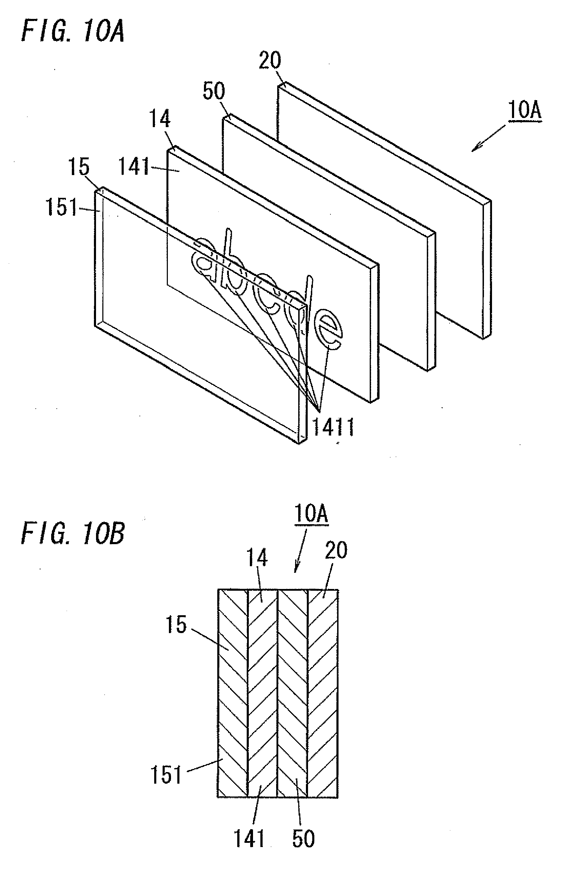

As shown in FIGS. 10A and 10B, the wireless identification card **10A** is different from the wireless identification card **10** of the first embodiment in that the solar cell **15,** the indication device **14,** and a background plate **50** are arranged over the front surface of the main body **20**. Besides, components common to the wireless identification card **10A** of the present embodiment and the wireless identification card **10** of the first embodiment are designated by the same reference numerals and no explanations thereof are deemed necessary.

The solar cell **15** (solar cell module **151**) is disposed over the front surface of the main body 20 such that the indication unit **14** (indication screen **141**) is interposed between the solar cell **15** and the main body **20**. In brief, the solar cell **15** is disposed over a front surface of the indication device **14**. Further, between the indication device **14** and the main body **20** is disposed the background plate (background layer) **50** (the background plate **50** is disposed over a rear surface of the indication screen **141** of the indication device **14**). In the wireless identification card **10A,** the solar cell **15**, the indication device **14**, the background plate **50,** and the main body **20** are laminated in this order from the front side of the wireless identification card **10A.**

As described in the above, the solar cell **15** is the dye-sensitized solar cell. The dye-sensitized solar cell can be formed to have translucency for visible light. In the present embodiment, the solar cell module **151** of the solar cell **15** has translucency for visible light (the solar cell module **151** of the solar cell **15** is transparent). It is sufficient that the solar cell module **151** has transparency which is enough for a user to definitely view the visual indication of the indication device **14** through the solar cell **15**. The solar cell module **151** need not be configured not to absorb any visible light but to transmit all the visible light. That is, the solar cell module **151** may be configured to absorb a part of the visible light to generate electric power and to allow a user to definitely view the visual indication by the indication screen **141** of the indication device **14** through the solar cell module **151**. Therefore, the solar cell module **151** is not limited to be colorless and transparent, but may be colored and transparent. Further, the solar cell module **151** may have slight light diffuseness.

The background plate **50** is a white plate, for example. The background plate 50 diffuses light passing through the solar cell **15** (solar cell module **151**) and the indication device **14** (indication screen **141**). Therefore, the background plate **50** functions as a reflective plate (reflective layer) configured to reflect, toward the indication device **14,** the light passing through the solar cell module **151** and the indication screen **141**. Additionally, the background plate **50** defines a background color of the indication device **14** and improves the visibility of the visual indication by the indication device **14.**

Preferably, a contrast between the indication part **1411** of the indication screen **141** of the indication device **14** and the background plate **50** is not to less than 0.1. The contrast **C10** is represented by the following formula (1).

[FORMULA]

$$C10 = \frac{L10 - L11}{L10} \quad (1)$$

L10 denotes luminance (cd/m$^2$) of the indication part **1411,** and L11 denotes luminance (cd/m$^2$) of the background plate **50**.

Light (incoming light) coming into the wireless identification card **10A** from the visible side (front side) reaches the solar cell **15.** The solar cell **15** converts energy of light of a particular wavelength (wavelength of light which the dye absorbs) included in the incoming light into electrical energy, thereby generating electrical power. The incoming light which was directed through the solar cell module **151** of the solar cell **15** passes further through the indication screen **141** of the indication device **14** and reaches the background plate **50**. The light which reached the background plate 50 is reflected by the background plate **50**, and passes through the indication screen **141** of the indication device **14** again and finally reaches the solar cell module **151** of the solar cell **15**. The solar cell **15** converts energy of the light reflected by the background plate **50** into electric energy, thereby generating electric power.

According to the aforementioned wireless identification card **10A** of the present embodiment, since the solar cell **15** is disposed in front of the indication device **14,** the solar module **15** easily receives light in contrast to an instance where the solar cell **15** is disposed in back of the indication device **14.** Therefore, the electrical power generation of the solar cell **15** (an amount of electrical power generated by the solar cell **15**) can be increased. Further, the background plate **50** reflects light passing through the solar cell **15** and the indication device **14** to come into the solar cell **15** again. Thus, the solar cell **15** can make photoelectric conversion by use of light (reflection light) reflected by the background plate (reflective plate) **50** in addition to light (incoming light) which directly comes into the solar cell **15.** As a result, the electrical power generation of the solar cell **15** can be increased. In addition, it is possible to improve the visibility of the visual indication (the indication part **1411** of the indication screen **141**) of the indication device **14.** Accordingly, the indication device **14** gives at its indication screen **141** the visual indication which is easily recognized even when it is viewed from a distance.

Besides, the background plate **50** is not limited to the white plate, but may be a plate having its surface painted white. A color of the background plate **50** is not limited to white, but may be a color which makes the contrast C10 be not less than 0.1.

For example, the color of the background plate **50** may be a complementary color which is complementary to a color of the indication part **1411** of the indication screen **141.** For example, when the color of the indication part **1411** is red, aqua is selected as the color of the background color **50.** When the color of the indication part **141** is yellow, blue is selected as the color of the background color **50.** In brief, a color which is precisely complementary in the hue circle to the color of the indication part **1411** can be selected as the color of the background plate **50.**

As described in the above, with selecting the color of the indication part **1411** and the color of the background **50** to be complementary to each other, it is possible to improve the visibility of the indication part **1411** of the indication screen **141,** and the indication device **14** gives at its indication screen **141** the visual indication which is easily recognized even when it is viewed from a distance. Besides, the color of the background plate **50** need not be a color which is precisely complementary in the hue circle to the color of the indication part **1411,** but may be a color which is regarded to be approximately complementary in the hue circle to the color of the indication part **1411.**

The background plate **50** may be defined as a regressive reflection plate configured to reflect incoming light to a direction opposite to a direction in which the light comes into the regressive reflection plate. The regressive reflection plate can be made by forming a predetermined concavo-convex structure in a surface of a metal plate.

With this arrangement, light which was directed through the solar cell **15** and the indication device **14** and reached the background plate **50** is reflected to the direction opposite to the incoming direction by the background plate **50.**

Accordingly, in contrast to a situation where light is diffused by the background plate **50,** the indication screen **141** of the indication device **14** can be brightened. Thus, the indication device **14** can have the improved visibility and is therefore easily recognized even from a distance.

**(THIRD EMBODIMENT)**

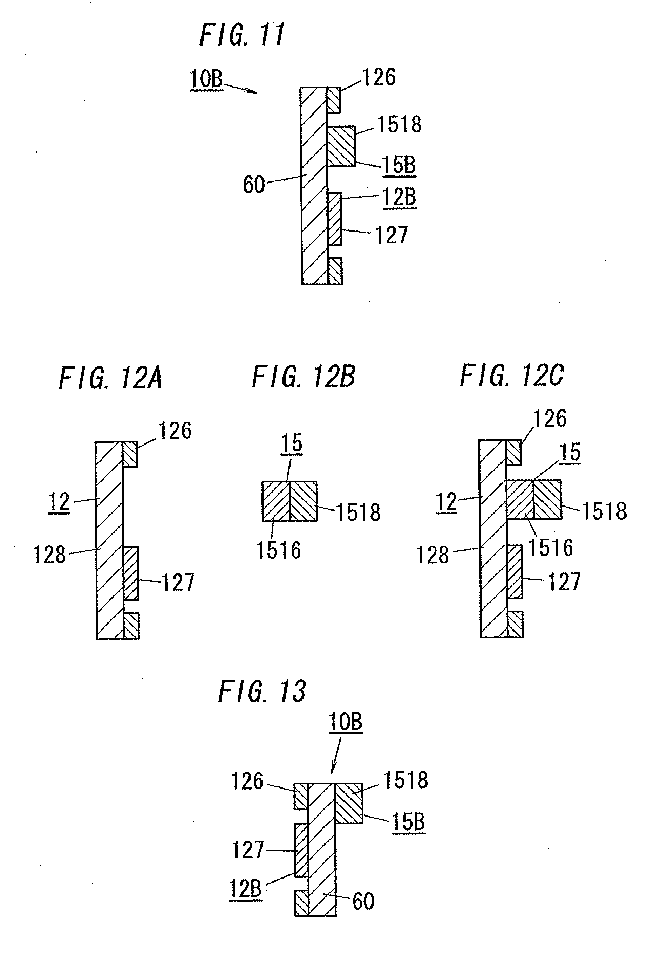

As shown in FIG. 11, the wireless identification card **10B** of the present embodiment is characterized in configurations of the communication device **12B** and the solar cell **15B.** The other configurations of the wireless identification card **10B** are the same as those of the wireless identification card **10** of the first embodiment, and are designated by the same reference numerals, and no explanations thereof are deemed necessary.

FIGS. 12A to 12C show a reference example for the wireless identification card **10B** of the present embodiment.

The communication device **12** illustrated in FIG. 12A includes a first base (substrate) **128** shaped into a rectangular shape, an antenna **126** formed on a first surface (front surface) of the first base **128,** and a communication circuit **127** formed on the first surface of the first base **128.** The antenna **126** is formed in a circular pattern along an outer periphery of the first base plate **128,** for example. The antenna **126** defines the above LF antenna **121** and RF antenna **123.** The communication circuit **127** is a circuit configured to communicate with the reading device **90** by use of the antenna **126,** and defines the above LF reception circuit **122,** RF communication circuit **124,** and communication control circuit **125.**

The solar cell **15** illustrated in FIG. 12B comprises the opposite electrode substrate **1616** defined as a second base plate shaped into a rectangular shape, and a photoelectric conversion member (photoelectric conversion layer) **1518.** The photoelectric conversion member **1818** is defined by the working electrode substrate **1511,** the working electrode **1512,** the semiconductor layer **1513,** the electrolyte layer **1514,** the opposite electrode **1515,** and the sealing material **1517.**

In a situation where the solar cell **15** is arranged in front of the communication device **12,** the second base plate **1516** of the solar cell **15** is fixed to the first surface of the first base plate **128** of the communication circuit **12,** as shown in FIG. 12C. With this arrangement, the thickness of the wireless identification card **10** is increased in contrast to a situation where the wireless identification card **10** is devoid of the solar cell **15.** Besides, when the second base plate **1516** of the solar cell **15** is placed on the first surface of the first base plate **128** in a manner not to overlap with the communication circuit **127** and the antenna **126,** as shown in FIG. 12C, the provision of the solar cell **15** only leaves a slight increase of the thickness of the wireless identification card **10.** However, a thickness of a laminate of the solar cell **18** and the communication device **12** always exceeds a total thickness of the first base plate **128,** the second base plate **1516,** and the photoelectric conversion member **1518.**

FIG. 11 shows the communication device **12B** and the solar cell **15B** of the wireless identification card **10B** of the present embodiment. The wireless identification card **10B** includes a base plate (common base plate) used in both the solar cell **15B** and the communication device **12B.** The common base plate **60** is a substrate (the mounting substrate of the main body **20,** as mentioned in the above), for example. The communication device **12B** is defined by the common base substrate **60,** the antenna **126** formed on the common base plate **60** (a front surface of the common base plate **60**), and the communication circuit **127** formed on the common base plate **60** (the front surface of the common base plate **60**). The solar cell **16B** is defined by the common base plate **60,** and the photoelectric conversion member **1518** formed on the common base plate 60 (the front surface of the common base plate **60**).

According to the wireless identification card **10B,** the common base plate **60** is used as both the first base plate **128** of the communication device **12** and the second base plate **1516** of the solar cell **15.** Therefore, the wireless identification card **10B** of the present need not be provided with the second base plate **1616** of the solar cell **15.** In other words, in the instance shown in FIG. 11, the common base plate 60 is shared by both the solar cell **15B** and the communication device **12B.** Therefore, the laminate (illustrated in FIG. 11) of the solar cell **15B** and the communication device **12B** is thinner than the laminate (illustrated in FIG. 12C) of the solar cell **15** and the communication device **12** by an extent of a thickness of the second base plate **1516** of the solar cell **15B.**

The aforementioned wireless identification card **10B** includes the common base plate **60** used as both a structural member (second base plate **1516**) of the solar cell **15B** and a structural member (first base plate **128**) of a component (communication device **12B**) other than the solar cell **15.** Therefore, it is possible to thin the wireless identification card **10B.** Further, in the present embodiment, the photoelectric conversion member **1518,** the antenna **126,** and the communication circuit **127** are formed over the front surface (first surface of the common base plate **60** in its thickness direction) of the common base plate **60.** Thus, the other components (e.g., the storage cell **16** and the identification information storage **12** not shown) can be formed over the rear surface (second surface of the common base plate **60** in its thickness direction) of the common base plate **60.** In contrast to the wireless identification card in which the photoelectric conversion member **1518,** the antenna **126,** and the communication circuit **127** are formed over the different surfaces of the common base plate **60,** it is possible to thin the wireless identification card **10B.**

FIG. 13 shows a modification of the wireless identification card **10B** of the present embodiment. In the modification shown in FIG. 13, the photoelectric conversion member **1518** is formed over the front surface of the common base plate **60,** and the antenna **126** and the communication circuit **127** are formed over the rear surface of the common base plate **60.**

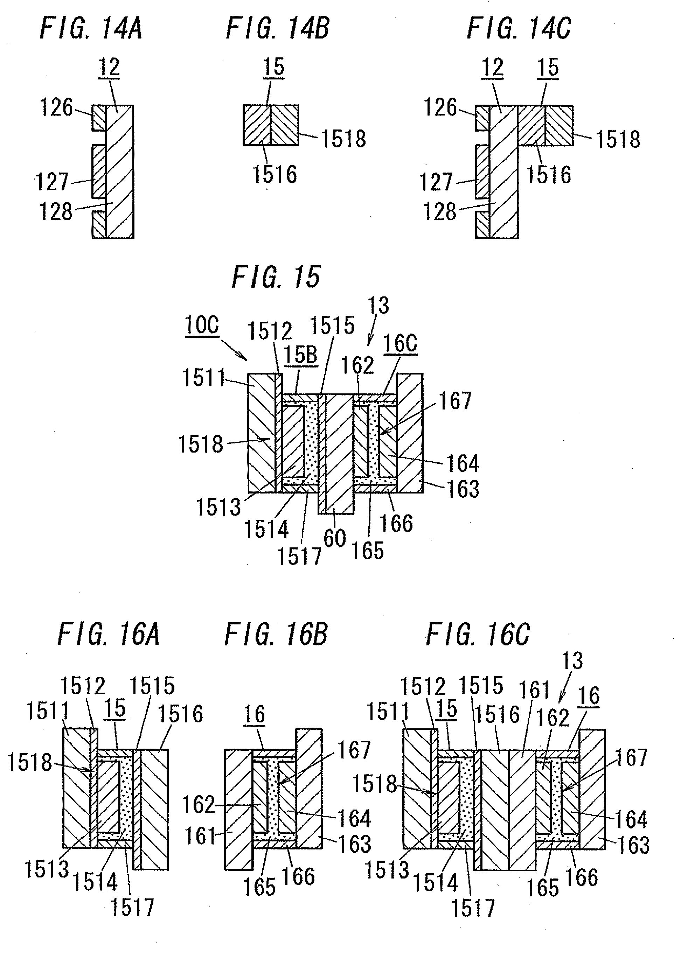

With the modification shown in FIG. 13, the photoelectric conversion member **1518** is formed over one surface of the common base plate **60,** and the antenna **126** and the communication circuit **127** are formed on the other surface of the common base plate.**60.** Thus, in contrast to the wireless identification card in which the photoelectric conversion member **1518,** the antenna **126,** and the communication circuit **127** are formed over the same surface of the common base plate **60,** it is possible to decrease in size the wireless identification card **10B** (a size of the common base plate **60).** In brief, the surface (rear surface) of the common base plate **60** over which the antenna **126** and the communication circuit **127** are formed need not be provided with a space for forming the photoelectric conversion member **1518** of the solar cell **12B.** Consequently, it is possible to downsize the common base plate **60.** Accordingly, the wireless identification card **10B** can be downsized. Further, as shown in FIGS. 14A to 14C, in contrast to a situation where the solar cell **15** and the communication device **12** are provided with the dedicated base plates **1516** and **128,** respectively, it is possible to thin the laminate of the solar cell **15B** and the communication device **12B.**

Besides, in the wireless identification card **10B,** a structural member of the solar cell **15** may be used as a structural member of the identification information storage **11.** Alternatively, a structural member of the solar cell **15** may be used as both a structural member of the communication device **12** and a structural member of the identification information storage **11.** With these arrangements, the wireless identification card 10B can be thinned.

**(FORTH EMBODIMENT)**

As shown in FIG. 15, the wireless identification card **10C** of the present embodiment is characterized in the configurations of the solar cell **15B** and the storage cell **16C.** The configurations common to the wireless identification card **10C** of the present embodiment and the wireless identification cards **10** and **10B** of the other embodiments are designated by the same reference numerals, and no explanations thereof are deemed necessary.

FIG. 16 shows a reference example of the wireless identification card **10C** of the present embodiment.

The solar cell **15** shown in FIG. 16A includes the opposite substrate **1516** and the photoelectric conversion member **1518**. The opposite substrate **1516** is defined as the second base plate shaped into a rectangular shape.

The storage cell 16 shown in FIG. 16B includes a positive electrode base plate (positive electrode substrate) **161** in the form of a rectangular plate, and a first electric conductive layer (positive electrode) **162** formed on a first surface of the positive electrode substrate **161**. Further, the storage cell **16** includes a negative electrode base plate (negative electrode substrate) **163** in the form of a rectangular plate, and a second electric conductive layer (negative electrode) **164** formed on a first surface of the negative electrode substrate **163**. The positive electrode substrate **161** and the negative electrode substrate **163** are arranged such that the positive electrode **162** and the negative electrode **164** are faced to each other. Between the positive electrode substrate **161** and the negative electrode substrate **163** is disposed a sealing material **166** which is shaped into a cylindrical shape and is configured to surround the positive electrode **162** and the negative electrode **164**. A space surrounded by the sealing member **166** is filled with an electrolysis solution.

As shown in FIG. 16C, when the solar cell **15** are simply superimposed on the storage cell **16**, a thickness of the laminate of the solar cell **15** and the storage cell **16** is equal to a sum of the thickness of the solar cell **16** and the thickness of the storage cell **16**.

FIG. 15 shows the solar cell **15B** and the storage cell **16C** of the wireless identification card **10C** of the present embodiment. The wireless identification card **10C** includes the base plate (common base plate) **60** shared by both the solar cell **15B** and the storage cell **16C**. The solar cell **15B** are defined by the common base plate **60** together with the photoelectric conversion member **1518** formed on the common base plate **60** (the front surface of the common base plate **60**). The storage cell **16C** are defined by the common base plate **60** together with a storage cell member (storage cell layer) **167** formed on the common base plate **60** (the rear surface of the common base plate **60**). The storage cell member **167** is defined by the first electric conductive layer **162**, the negative electrode base plate **163**, the second electric conductive layer **164**, the electrolysis solution **165**, and the sealing member **166**.

As described in the above, in the wireless identification card **10C** of the present embodiment, the common base plate 60 is used as both the positive electrode base plate **161** of the storage cell **16** and the second base plate **1516** of the solar cell **15**. In other words, in the instance shown in FIG. 15, the solar cell **15B** and the storage cell **16C** share the common base plate **60**. Thus, a laminate (illustrated in FIG. 15) of the solar cell 15B and the storage cell **16C** is thinner than a laminate (illustrated in FIG. 16C) of the solar cell **15** and the storage cell **16**.

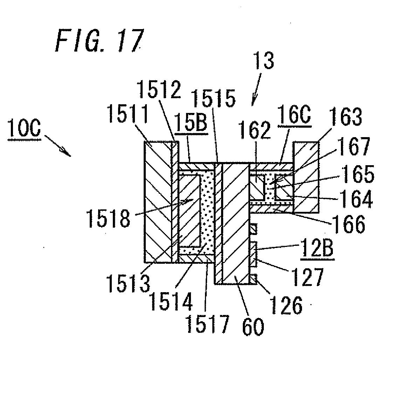

FIG. 17 shows a modification of the present embodiment. In FIG. 17, the antenna **126** and the communication circuit **127** are formed over the rear surface of the common base plate **60**. The communication device **12B** is defined by the common base plate **60**, the antenna **126**, and the communication circuit **127**. In other words, the solar cell **15B**, the storage cell **16C**, and the communication device **12B** share the common base plate 60. Thus, it is possible to further thin the wireless identification card **10C**.

Besides, the common base plate **60** may have transparent.

**(FIFTH EMBODIMENT)**

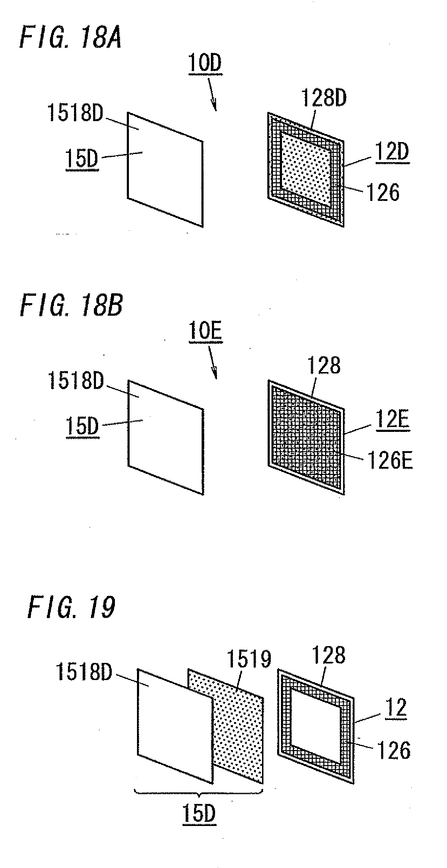

As shown in FIG. 18A, the wireless identification card **10D** of the present embodiment is characterized in the configurations of the communication device **12D** and the solar cell **15D**. The configurations common to the wireless identification card **10D** of the present embodiment and the wireless identification cards **10, 10A** to **10C** of the other embodiments are designated by the same reference numerals, and no explanations thereof are deemed necessary.

The solar cell **15D** includes the photoelectric conversion member **1518D** defined as a cell body which has translucency and is configured to convert optical energy into electric energy. The photoelectric conversion member **1518D** is defined by the first substrate **1511**, the working electrode **1512**, the semiconductor layer **1513**, the electrolyte layer **1514**, the opposite electrode **1515**, the second substrate **1516**, and the sealing member **1517**. In addition, the photoelectric conversion member **1518D** is shaped into a rectangular shape and has a size same as that of the base plate **128** of the communication device **12**.

The photoelectric conversion member **1518D** is configured to have translucency for visible light. In this situation, it may occur that the light, which is incident on the photoelectric conversion member **1518D** from a front surface thereof, passes through the photoelectric conversion member **1518D**, and is directed out from a rear surface of the photoelectric conversion member **1518D**. Therefore, as shown in a reference example of FIG. 19, it is preferred to dispose a reflector (reflective layer) **1519** in back of the photoelectric conversion member **1518D**. The reflector **1519** is configured to reflect, to the photoelectric conversion member **1518D**, light which passed through the photoelectric conversion member **1518D**. In brief, the solar cell **15D** is preferred to be provided with the photoelectric conversion member **1518D** and the reflector **1519**.

As described in the above, with providing the reflector **1519 to** the solar cell, it is possible to return, to the photoelectric conversion member **1518D**, light which passed through the photoelectric conversion member **1518D** once. Thus, the light is directed to the photoelectric conversion member **1518D** with improved irradiation efficiency to thereby improve power generation efficiency. The reflector **1519** may be in the form of a white plate reflecting and diffusing in various directions, or a mirror of regular reflection.

The communication device **12D** is defined by the base plate **128D,** the antenna **126** formed over the base plate **128D,** and the communication circuit **127** (not shown) formed over the base plate **128D**. The base plate **128D** has its first surface (front surface) in its thickness direction defines a reflective surface configured to reflect visible light. The reflective surface can be formed by plating the front surface of the base plate **128D,** for example. Besides, the antenna **126** is formed on the front surface of the base plate **128D** to have a loop shape along an outer periphery of the base plate **128D**. Therefore, a reflector function is located to a part (inside area and outside area of the antenna **126**) other that a part on which the antenna **126** is formed. The communication device **12D** is disposed in back of the photoelectric conversion member **1518D** such that the front surface of the base plate **128D** is faced to the photoelectric conversion member **1518D**.

In the wireless identification card **100** of the present embodiment, the base plate **128D** of the communication device **12D** is used as the reflector **1519**, and the solar **cell 15D** is defined by the base plate **128D** and the photoelectric conversion member **1518D**.

As described in the above, in the wireless identification card 90D of the present embodiment, the base plate **128D** which is a structural part of the communication device **12D** is used as the reflector **1519.** In brief, the communication device **12D** and the solar cell **15D** share the base plate **128D**. Therefore, it is possible to omit the reflector **1519,** and to thin the laminate of the solar cell **15D** and the communication device **12D**.

FIG. 18B illustrates the wireless identification card **10E** as a modification of the present embodiment. The wireless identification card **10E** is different in the communication device **12E** from the wireless identification card **10D**. The communication device **12E** is defined by the base plate 128, the antenna **128E** formed over the base plate **126,** and the communication circuit **127** (not shown) formed over the base plate **126**.

The antenna **126E** is formed on the first surface of the base plate **128** in its thickness direction to cover the approximately entire first surface. Further, the antenna **126E** is configured to reflect visible light, and is formed by painting a surface of the antenna **126E** white, by performing mirror finishing on the surface of the antenna **126E,** and by plating the surface of the antenna **126E**. That is, light reflectivity is given to the surface of the antenna **126E**. The communication device **12E** is placed over the rear surface of the photoelectric conversion member **1518D** such that the front surface of the base plate **128** is faced to the photoelectric conversion member **1518D**.

In the wireless identification card **10E** shown in FIG. 18B, the antenna **126E** is used as the reflector **1519,** and the solar cell **15D** is defined by the antenna **126E** and the photoelectric conversion member **1518D**.

As described in the above, the antenna **126E** which is a structural member of the communication device **12E** functions as the reflector **1519**. That is, the communication device **12E** and the solar cell **15D** share the antenna **126E**. Thus, it is possible to omit the reflector **1519,** and to thin the laminate of the solar **cell 15D** and the communication device **12E**.

Notably, the features of the wireless identification card **10D** of the present embodiment can be applied to the wireless identification card **10B** of the third embodiment and the wireless identification card **10C** of the fourth embodiments. In this arrangement, it is possible to more thin the wireless identification **cards 10B** and **10C.**

### (SIXTH EMBODIMENT)

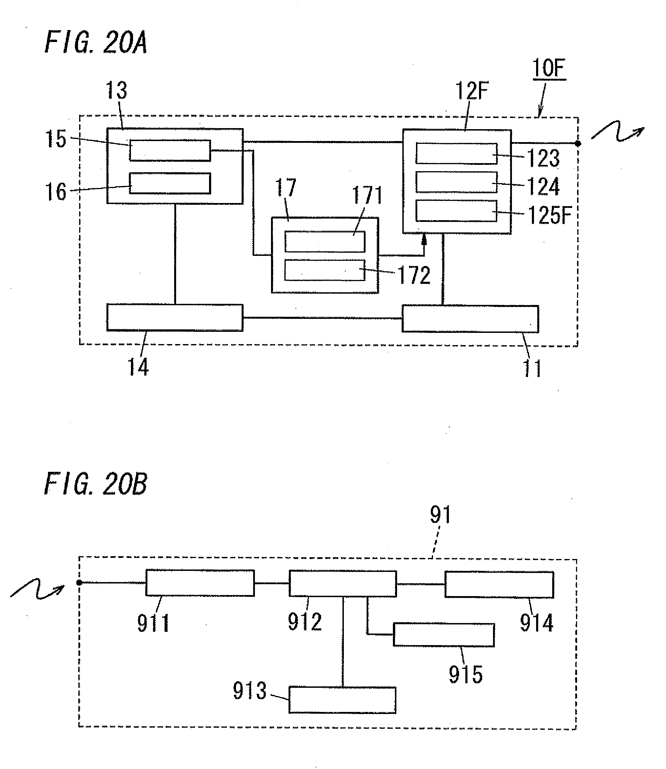

As shown in FIG. 20A, the wireless identification card **10F** of the present embodiment is different from the wireless identification card **10** mainly in that the wireless identification card **10F** is provided with the mode control device **17.** The configurations common to the wireless identification card **10F** of the present embodiment and the wireless identification card **10** of the first embodiments are designated by the same reference numerals, and no explanations thereof are deemed necessary.

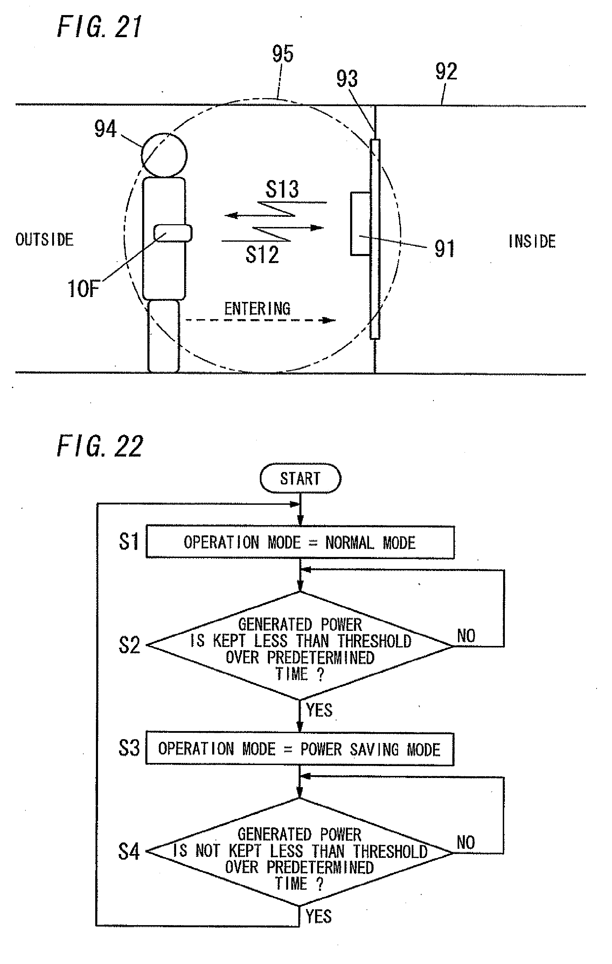

The wireless identification card **10F** of the present embodiment constructs the entrance and exit management system in association with an authentication device (identification information reception device) **91** shown in FIG. 21 which is a reading device. The entrance and exit management system is used for managing an entrance of a room **92** being a target space, as shown in FIG. 21. The authentication device **91** is installed on a wall in a vicinity of an entrance and exit gate **93** of the room **92**. The wireless identification card **10F** is carried by a user 94. The wireless identification card **10F** is configured to establish wireless communications with the authentication device **91**.

The entrance and exit management system establishes the wireless communications between the wireless identification card **10F** and the authentication **91** by electromagnetic wave as a medium, thereby performing authentication of the user **94** carrying the wireless identification card **10F**. The entrance and exit management system determines, on the basis of result obtained by the authentication, whether or not the user is allowed to enter and exit to and from the room **92.**

The wireless identification card **10F** includes the identification information storage **11,** the communication device **12F,** the power supply device **13,** the indication device **14,** and the mode control device **17.** The mode control device **17** is configured to select one from operation modes of the communication device **12F.**

The communication device **12F** includes the RF antenna **123,** the RF communication circuit **124,** and the communication control circuit **125F,** for example. The communication control circuit **125F** is configured to receive electrical power from the storage cell **16** of the power supply device **13,** and is configured to transmit intermittently a wireless signal (i.e., an identification signal **S12)** including the identification information stored in the identification information storage **11.** The electric power stored in the storage cell **16** is consumed each time the communication device **12F** transmits the identification signal **S12.** Since the solar cell **15** receives sufficient light in normal use of the wireless identification card **10F,** the solar cell **15** can generate electrical power (generated electric power) enough to supplement the electric power of the storage cell **16** consumed by transmission of the identification signal **S12** by the communication device **12F.** Thus, the storage cell **16** sees no substantial change in its remaining electrical power.

The authentication device **91** includes, as shown in FIG. 20B, a wireless communication device **911,** an authentication processing device **912,** a notification device **913,** a lock control device **914,** and a storage **915.**

The wireless communication device **911** is configured to communicate with the communication device **12F** of the wireless identification card **10F.** The wireless communication device **911** receives the identification signal **S12** transmitted from the wireless identification card **10F.**

In a vicinity of the authentication device **91** (around the entrance and exit of the room **92**) is formed an authentication area **95** defined as a range in which the wireless identification card **10F** and the authentication device **91** can communicate with each other by use of electric wave. Therefore, when the user **94** who carries the wireless identification card **10F** (namely, the wireless identification card 10F) exists within the authentication area **95,** the authentication device **91** can receive the identification signal **S12** (i.e., identification information) transmitted from the wireless identification card **10F.**

The storage **915** is realized by a memory, for example, which is configured to store the identification information (valid identification information) corresponding to a user who is authorized to enter and exit to and from the room **92.**

The authentication processing device **912** is configured to authenticate the identification information included in the identification signal **S12** received by the wireless communication device **911.** For example, the authentication processing device **912** is configured to check the identification information received by the wireless communication device **911** with the valid identification information stored in the storage **915** to perform authentication of the identification information. When the identification information received by the wireless communication device **911** is identical to the valid identification information, the authentication processing device **912** determines success of the authentication. In this situation, the authentication processing device **912** controls the wireless communication device **911** in a manner to transmit the acknowledge signal (ACK signal) **S13** including the identification information authenticated successfully. In addition, in response to success of the authentication of the identification information, the authentication processing device **912** output an authentication success signal to the notification device **913** and the lock control device **914.** In contrast, when the identification information received by the wireless communication device **911** is not identical to any valid identification information, the authentication processing device **912** determines failure of the authentication. In this situation, the authentication processing device **912** controls the wireless communication device **911** not to transmit the acknowledge signal S13, and outputs an authentication failure signal to the notification device **913** and the lock control device **914.**

The notification device **913** is configured to issue, by use of sound and/or light, a result of the authentication of the identification information by the authentication processing device **912.** The notification device **913** issues success of the authentication upon receiving the authentication success signal. The notification device **913** issues failure of the authentication and gives warning upon receiving the authentication failure signal.

The lock control device **914** is configured to control a lock device (not shown) installed in the entrance and exit door **93** of the room **92.** Upon receiving the authentication success signal from the authentication processing device **912,** the lock control device **914** controls the lock device of the door **93** to unlock the door **93.** Upon receiving the authentication failure signal from the authentication processing device **912,** the lock control device **914** controls the lock device of the door **93** to keep the door **93** locked.

Besides, a particular device connected to the authentication device **91** may have one or more parts of functions of the authentication device **91.** For example, the said another device may have the authentication processing device **912.** With this arrangement, said another device may check the identification information.

According to the aforementioned entrance and exit management system, the wireless identification card **10F** communicates with the authentication **91** to transmit the identification information stored in the identification information device **11** to the authentication device **91.** The authentication device **91** checks the identification information received from the wireless identification card 10F with a preliminarily registered data (valid identification information). Upon succeeding the authentication, the authentication device **91** unlocks the door **93.** Upon failing the authentication, the authentication device **91** keeps the door **93** locked. According to the entrance and exit management system, it is possible to perform the entrance and exit management for the user **94,** provided that the user carries the wireless identification card **10F.**

The communication device **12F** is configured to perform the operation mode selected from one of a normal mode and a power saving mode. The normal mode and the power saving mode have different frequencies of transmission of the identification information. In the normal mode, the communication control circuit **125F** transmits the identification signal **S12** at a predetermined first period (e.g., 1 second). While, in the power saving mode, the communication control circuit **125F** transmits the identification signal **S12** at a predetermined second period (e.g., 10 second) longer than the first period. As described in the above, the communication device **12F** operates in one of the operation modes having the different frequencies of transmission of the identification information. The frequency of transmitting the identification information is defined as the number of times per a predetermined time for the transmission of the identification information. The power saving mode may be smaller in the number of times per a predetermined time for the transmission of the identification information than the normal mode. For example, with regard to the power saving mode, the number of transmission of the identification information may be zero (namely, transmission of the identification signal **S12** is terminated).

The communication device **12F** consumes electric power each time the communication device **12F** transmits the identification information. Accordingly, consumed power per a predetermined time increases with an increase of frequency of transmission of the identification information. Thus, the power saving mode is smaller in power consumption (consumed power per a predetermined time) than the normal mode.

The mode control device **17** is configured to switch the operation mode of the communication device **12F** between the normal mode and the power saving mode.

The mode control device **17** includes a measurement device **171** configured to measure generated electrical power of the solar cell **15**. Further, the mode control device **17** includes a switching device **172** configured to determine surrounding luminance of the wireless identification card **10F** on the basis of the measurement result of the measurement device **171,** and switch the operation mode of the communication device **12F** corresponding to the measured surrounding luminance. As shown in FIG. 22, the mode control device **17** selects the normal mode as the operation mode of the communication device **12F** in an initial state (S1).

The switching device **172** switches the operation mode of the communication device **12F** from the normal mode to the power saving mode, upon judging, on the basis of a first criterion, that the surrounding luminance does not exceed a predetermined value while the communication device **12F** operates in the normal mode.

In more detail, the switching device **172** compares a predetermined first threshold with the generated electric power of the solar cell **15** obtained from the measurement device **171.** When the generated electric power does not exceed the first threshold, the switching device **172** activates a timer (not shown). While the generated electric power is less than the first threshold, the switching device **172** keeps the timer operating. When the timer finishes counting a first predetermined time, the switching device **172** judges that the surrounding luminance of the wireless identification card **10F** is less than the predetermined value. In brief, the first criterion is defined as to whether or not the generated electric power of the solar cell **15** is kept less than the first threshold over a predetermined time. Besides, when the generated electric power is not less than the first threshold after the timer is activated, the switching device **172** resets the timer. As described in the above, when the generated electric power of the solar cell **15** is kept less than the first threshold over the predetermined time while the communication device **12F** is in the normal mode (S2: Yes), the mode control device **17** determines that the surrounding luminance is less than the predetermined value, and switches the operation mode of the communication device **12F** to the power saving mode (S3).

Accordingly, when the generated electric power of the solar cell **15** becomes less than the first threshold only temporarily, the operation mode of the communication device **12F** is not switched to the power saving mode. When the generated electric power is kept less than the first threshold over the predetermined time, the operation mode of the communication device **12F** is switched to the power saving mode. Therefore, in a situation where the user **94** uses the wireless identification card **10F** in the entrance and exit management system, even if the generated electric power of the solar cell **15** becomes temporarily less than the first threshold due to an instant decrease in intensity of light coming into the solar cell **15** interfered by shadow of a hand of the user **94,** for example, the operation mode of the communication device **12F'** is not switched to the power saving mode.

The switching device **172** switches the operation mode of the communication device **12F** from the power saving mode to the normal mode, upon judging, on the basis of a second criterion, that the surrounding luminance exceeds the predetermined value while the communication device **12F** operates in the power saving mode.

In more detail, while the communication device **12F** operates in the power saving mode, the switching device **172** compares the predetermined first threshold with the generated electric power of the solar cell 15 obtained from the measurement device **171.** When the generated electric power is not less than the first threshold, the switching device **172** activates the timer (not shown). While the generated electric power is not less than the first threshold, the switching device **172** keeps the timer operating. When the timer finishes counting a second predetermined time, the switching device **172** judges that the surrounding luminance of the wireless identification card **10F** exceeds the predetermined value. In brief, the second criterion is defined as to whether or not the generated electric power of the solar cell **15** is kept exceeding the first threshold over a predetermined time. Besides, when the generated electric power is less than the first threshold after the timer is activated, the switching device **172** resets the timer. As described in the above, when the generated electric power of the solar cell **15** is kept exceeding the first threshold over the predetermined time while the communication device **12F** is in the power saving mode (S4: Yes), the mode control device **17** determines that the surrounding luminance exceeds the predetermined value, and switches the operation mode of the communication device **12F** to the normal mode (S1).

Each criterion includes two parameters, that is, the first threshold and time (time in which the generated electric power kept less than the first threshold, or time in which the generated electric power kept not less than the first threshold). The first predetermined time of the first criterion is greater than the second predetermined time of the second criterion.

In more detail, the switching device **172** judges that the surrounding luminance goes below the predetermined value when the generated electrical power is kept less than the first threshold over 1 minute. The first threshold is defined as a value corresponding to the generated electric power which the solar cell **15** generates under the surrounding luminance of 10 lx. Therefore, when the surrounding luminance of the wireless identification **card 10F** is kept less than 10 lx over 1 minute, the operation mode of the communication device **12F** is switched to the power saving mode. The switching device **172** judges that the surrounding luminance exceeds the predetermined value when the generated electrical power is kept not less than the first threshold over 2 seconds. Therefore, when the surrounding luminance of the wireless identification card **10F** is kept not less than 10 lx over 2 seconds, the operation mode of the communication device **12F** is switched to the normal mode.

Thus, in the present embodiment, the first criterion is set to be lower than the second criterion for switching the operation mode. Therefore, the operation mode is more likely to be switched while the communication device **12F** is in the power saving mode than in the normal mode. Thus, it is enabled to avoid inconvenient situation of keeping the wireless identification card **10F** in the power saving mode in a condition where the communication device **12F** is not switched from the power saving mode to the normal mode during the use of the wireless identification card **10F** by the user.

Besides, the first predetermined time and the second predetermined time are not limited to the aforementioned instances. For example, the first predetermined time may be 10 minutes. Further, the first criterion and the second criterion may have the different first threshold.

The measurement device **171** of the mode control device **17** monitors a voltage, a current, and/or an electrical power output from the solar cell **15** to measure the generated electrical power of the solar cell **15.** For example, the measurement device **171** measures the voltage, the current, and/or the electrical power under a condition where an arbitrary load is connected to the solar cell **15.** Alternatively, the measurement device **171** measures the voltage of the solar cell **15** in an open state, or the current of the solar cell **15** in a short circuit state.

The aforementioned entrance and exit management system includes the authentication device **91** and the wireless identification card **10F.** The authentication device **91** is placed around the entrance of the target region such as the room **92.** The wireless identification card **10F** is defined as an identification device configured to communicate with the authentication **91** and destined to be carried by the user **94.** In this entrance and exit management system, when the identification information is transmitted from the wireless identification card **10F** to the authentication device **91,** the authentication device **91** performs authentication of the identification information, and determines, on the basis of a result of the authentication, whether the user **94** is authenticated to enter and exit to and from the target region.

The wireless identification card **10F** includes the identification information storage **11,** the communication device **12F,** the power supply device **13,** and the mode control device **17.** The identification information storage **11** is configured to store the identification information. The communication device **12F** is configured to establish the wireless communications with the authentication device **91** to transmit the identification information to the authentication device **91.** The power supply device **13** includes the solar cell **15** and the storage **cell 16** and is configured to supply electric power to the communication device **12F.** The solar cell **15** is configured to generate an electric power in response to reception of light. The storage cell **16** is configured to store the electric power generated by the solar cell **15.** The communication device **12F** is configured to operate in the two operation modes, one being the normal mode, and the other being the power saving mode. In the normal mode, the communication device **12F** transmits the identification information to the authentication device **91** at a predetermined period. The power saving mode is lower, in a frequency at which the communication device **12F** transmits the identification information to the authentication device **91,** than the normal mode. The mode control device **17** is configured to perform measurement of the generated electric power of the solar cell **15,** and switch the operation mode of the communication device **12F** in conformity with the surrounding luminance which is determined on the basis of a result of the measurement. Especially, upon judging, on the basis of the predetermined criterion, that the surrounding luminance is less than the predetermined value, the mode control device **17** switches the operation mode of the communication device **12F** to the power saving mode.

According to the wireless identification card **10F** of the present embodiment, when the surrounding luminance of the wireless identification card **10F** is less than the predetermined value, the operation mode of the communication device **12F** is switched to the power saving mode. The power saving mode is lower in a transmission frequency of the identification information lower than the power saving mode. Consumed power at the communication device **12F** in the power saving mode is lower than that in the normal mode. When the wireless identification card **10F** is stored in a dark room (e.g., a drawer, a bag, a pocket of clothes, a locker, and a closet) in which the solar cell **15** fails to receive sufficient light while the user **94** does not use the wireless identification card **10F,** it is possible to suppress a decrease in remaining power of the storage cell **16.** Thus, in contrast to a situation where the communication device **12F** always operates in the normal mode, it is possible to suppress a decrease in remaining power of the storage cell **16.** Therefore, it is possible to prevent occurrence of an undesired situation where the communication between the wireless identification card **10F** and the authentication device **91** fails to be established due to a shortage of remaining power of the storage cell **16.** Thus, the entrance and exit management system can be free from failure and operate normally (the user **94** is allowed to enter and leave a room).

For example, provided that the authentication device **91** is installed in user's office, the user **94** does not use the wireless identification card **10F** on one's way home, and the wireless identification card **10F** need not transmit the identification information. Therefore, provided that the user **94** leaves the user's office, power consumed when the communication device **12F** transmits the identification information is wasteful. According to the wireless identification card **10F** of the present embodiment, by decreasing the transmission frequency of the identification information while the wireless identification card **10F** is not used, an increase in wasteful power consumption is suppressed as possible. Thus, it is possible to suppress a decrease in the remaining power of the storage cell **16** (it is possible to suppress an increase in power consumption).

In addition, in the wireless identification card **10F,** when the surrounding luminance of the wireless identification card **10F** exceeds the predetermined value, the operation mode of the communication card **10F** is switched to the normal mode from the power saving mode. Consequently, when the user **94** uses the wireless identification card **10F,** the transmission frequency of the identification information is increased, and therefore a waiting time for transmission of the identification information is shortened.

As described in the above, according to the wireless identification card **10F,** the communication device **12F** operates in the power saving mode while the wireless identification card **10F** is not used (while the wireless identification card **10F** need not communicate with the authentication device **91).** Thus, in contrast to a situation where the communication device **12F** operates in the normal mode, it is possible to reduce consumption of power stored in the storage cell **16.** The communication device **12F** operates in the normal mode while the wireless identification card **10F** is used (while the wireless identification card **10F** need communicate with the authentication device **91).** Thus, in contrast to a situation where the communication device **12F** operates in the power saving mode, it is possible to decrease a waiting time starting when the user **94** comes close to the authentication device **91** and ending when the door **93** is unlocked. Therefore, it is possible to improve usability of the entrance and exit management system.

The power generated by the solar cell **15** relates to intensity of light coming into the solar **cell 15,** that is, the surrounding luminance of the wireless identification card **10F.** Therefore, the mode control device **17** judges the surrounding luminance of the wireless identification card **10F** on the basis of the result of the measurement of the power generated by the solar cell **15.** In brief, the solar cell **15** is used as a luminance sensor (a sensor configured to measure luminance). Therefore, since an additional luminance sensor is unnecessary, it is possible to suppress an increase in the number of parts assembling the wireless identification card **10F.**

Alternatively, the mode control device **17** may be configured to compare a predetermined threshold with an amount of generated power of the solar cell **15** (i.e., accumulated power generated by the solar cell **5** for a predetermined time). Further, the mode control device **17** may be configured to, when the amount of generated power of the solar cell **15** becomes less than the predetermined threshold, judge that the first criterion is fulfilled and that the surrounding luminance become less than the predetermined value. Alternatively, the mode control device **17** may be configured to, when the amount of generated power of the solar cell **15** exceeds the predetermined threshold, judge that the second criterion is fulfilled and that the surrounding luminance exceeds the predetermined value. With this arrangement, the surrounding luminance is judged to be less than the predetermined value unless the amount of generated power of the solar cell **15** exceeds the predetermined threshold. Thus, for example, even when the user **94** puts the wireless identification card **10F** in one's pocket and the generated power of the solar cell **15** increases momentarily due to momentary irradiation of intensive light to the solar cell **15** in the pocket, the communication device **12F** is kept operating in the power saving mode. Besides, when the amount of generated power becomes not less than predetermined threshold, the communication device **12F** is switched to the normal mode.

Alternatively, the switching device **172** of the mode control device **17** may be configured to judge that the surrounding luminance goes below the prescribed value, when the generated power of the solar cell **15** becomes less than a first threshold and also when a variation per a predetermined time of the generated power becomes less than a second threshold (when the generated power does not change beyond a second threshold for a predetermined time). In addition, the switching device **171** may be configured to judge that the surrounding luminance exceeds the predetermined value, when the generated power of the solar cell **15** becomes not less than the first threshold and also when the variation per a predetermined time of the generated power becomes not less than the second threshold (when the generated power is changed beyond the second threshold within the predetermined time).

With the arrangement, the first threshold is corresponding to the generated power of the solar cell **15** obtained when the surrounding luminance of the wireless identification card **10F** is 10 lx. The second threshold is corresponding to the generated power of the solar cell **15** obtained when the surrounding luminance of the wireless identification card **10F** is 200 lx. When the surrounding luminance of the wireless identification card **10F** is less than 10 lx and when the surrounding luminance does not changes beyond 200 lx within 1 minute, the operation mode of the communication device **12F** is switched to the power saving mode. In contrast, when the surrounding luminance of the wireless identification card **10F** is not less than 10 lx and when the surrounding luminance changes beyond 200 lx within 2 seconds, the operation mode of the communication device **12F** is switched to the normal mode.

With this arrangement, when the wireless identification card **10F** is placed in a dark room, the operation mode of the communication device **12F** is switched to the power saving mode. After the wireless identification card **10F** is taken out from the dark room, the operation mode of the communication device **12F** is switched to the normal mode in response to a change in the surrounding luminance of the wireless identification card **10F.** When a change in the generated power is not less than the second threshold, the mode control device **17** does not wait a predetermined time (e.g., 2 seconds) but switches the operation mode to the normal mode. When the user **94** takes out the wireless identification card **10F** from a pocket of user's clothes for example, the operation mode of the communication device **12F** is immediately switched from the power saving mode to the normal mode. Therefore, it is possible to prevent the wireless identification card **10F** from being kept in the power saving mode even when the user uses the wireless identification card **10F.**

The authentication device **91** may be configured to open and close an automatic door, or an automatic ticket gate, for example. Moreover, the wireless identification card **10F** and the authentication device **91** may be configured to establish communications (wireless communications) with each other by means of electromagnetic induction.

**Claims**

**1.** A wireless identification card comprising:

an identification information storage configured to store identification information;
a transmitter configured to transmit a wireless signal including the identification information stored in said identification information storage; and
a solar cell configured to supply electrical power to said transmitter,
wherein said solar cell includes a sensitizing material having sensitization action, an electron transport member, and a hole transport member.

**2.** The wireless identification card as set forth in claim 1, wherein
said wireless identification card comprises:

an indication unit shaped into a plate shape and configured to indicate predetermined visual information; and
a main body shaped into a card shape and configured to hold said identification information storage and said transmitter,
said sensitizing material being a dye which generates an electron and a hole in response to reception of light,
said solar cell being shaped into a plate shape, and further including a working electrode, and an opposite electrode, said electron transport member being made of a semiconductor layer and configured to support said sensitizing material, said working electrode being formed over a first surface of said electron transport member in its thickness direction and configured to receive an electron from said sensitizing material, said opposite electrode being formed over a second surface of said electron transport member in its thickness direction, said hole transport member being defined as an electrolyte layer interposed between said electron transport member and said opposite electrode and configured to receive a hole from said sensitizing material, and
one of said solar cell and said indication unit being configured to have translucency, and disposed over a front surface of said main body such that the other of said solar cell and said indication unit is interposed between said one of the solar cell and the indication unit and said main body.

**3.** The wireless identification card as set forth in claim 2, wherein
said indication unit is configured to have translucency, and is disposed over said front surface of said main body such that said solar cell is interposed between said indication unit and said main body,
said wireless identification card including a diffusion transmission member interposed between said indication unit and said solar cell, and
said diffusion transmission member being configured to, upon receiving light, diffuse the light used for visual indication by said indication unit, and transmit the light used for electrical generation of said solar cell.

**4.** The wireless identification card as set forth in claim 2, wherein
said solar cell has translucency for visible light, and is disposed over said main body such that said indication unit is interposed between said solar cell and said main body.

**5.** The wireless identification card as set forth in claim 4, wherein
said indication unit has translucency, and
said wireless identification card including a background plate which is disposed over a rear surface of said indication unit and is configured to improve visibility of visual indication by said indication unit.

**6.** The wireless identification card as set forth in claim 4, wherein
said indication unit has translucency, and
said wireless identification card including a reflective plate which is disposed over a rear surface of said indication unit and is configured to reflect the light which passes through said indication unit.

**7.** The wireless identification card as set forth in claim 2, wherein
said wireless identification card further comprises:

a receiver is configured to receive a wireless signal including indication information which defines visual indication indicated by said indication unit; and
an indication information storage configured to store the indication information received by said receiver,
said indication unit being configured to make visual indication corresponding to the indication information stored in said indication information storage, and
said solar cell being configured to energize said receiver and said indication unit.

**8.** The wireless identification card as set forth in claim 7, wherein
said wireless identification card further comprises an updating device configured to update contents of the indication information stored in said indication information storage to contents of the indication information received by said receiver.

**9.** The wireless identification card as set forth in claim 2, wherein
said indication unit is disposed over said front surface of said may body such that said solar cell is interposed between said indication unit and said main body,
said solar cell being defined by common base plate, and a photoelectric conversion member formed over said common base plate, said photo electric conversion member including said working electrode, said semiconductor layer, said electrolyte layer, and said opposed electrode, and
said transmitter being defined by said common base plate, an antenna formed over said common base plate, and a communication circuit formed over said common base plate and configured to transmit a wireless signal by use of said antenna.

**10.** The wireless identification card as set forth in claim 9, wherein
said photoelectric conversion member, said antenna, and said communication circuit are formed over a surface of said common base plate in its thickness direction.

**11.** The wireless identification card as set forth in claim 9, wherein
said photoelectric conversion member is formed over a first surface of said common base plate in its thickness direction,
said antenna and said communication circuit being formed over a second surface of said common base plate in its thickness direction.

**12.** The wireless identification card as set forth in claim 9, wherein
said wireless identification card further includes a storage cell configured to store electrical power generated by said solar cell,
said storage cell being defined by said common base plate and a storage cell member formed over said common base plate.

**13.** The wireless identification card as set forth in claim 2, wherein
said indication unit is disposed over said front surface of said may body such that said solar cell is interposed between said indication unit and said main body,

said solar cell being defined by a photoelectric conversion member and a reflector, said photoelectric conversion member being defined by said working electrode, said semiconductor layer, said electrolyte layer, and said opposed electrode, and said reflector being configured to reflect light which passes through said photoelectric conversion member,

said transmitter being defined by a base plate, an antenna formed over said base plate, and a communication circuit formed over said base plate and configured to transmit a wireless signal by use of said antenna, and

said reflector being said base plate or said antenna.

14. The wireless identification card as set forth in claim 2, wherein

said wireless identification card further includes a storage cell configured to store electrical power generated by said solar cell,

said indication unit being disposed over a front surface of said solar cell,

said solar cell being defined by a common base plate and a photoelectric conversion unit formed over said common base plate and including said working electrode, said semiconductor layer, said electrolyte layer, and said opposed electrode, and

said storage cell being defined by said common base plate and a storage cell member formed over said common base plate.

*FIG. 1A*

*FIG. 1B*

*FIG. 2*

*FIG. 3A*

*FIG. 3B*

FIG. 4A

FIG. 4B

FIG. 4C

30

## FIG. 5A

## FIG. 5B

## FIG. 6

*FIG. 7*

*FIG. 8A*

*FIG. 8B*

FIG. 9

*FIG. 10A*

*FIG. 10B*

## FIG. 11

10B → 126

1518

15B

60

12B

127

## FIG. 12A

126

12

128

127

## FIG. 12B

15

1518

1516

## FIG. 12C

126

15

12

1518

1516

128

127

## FIG. 13

10B

126   1518

15B

127

12B

60

*FIG. 14A*  *FIG. 14B*  *FIG. 14C*

*FIG. 15*

*FIG. 16A*  *FIG. 16B*  *FIG. 16C*

*FIG. 17*

*FIG. 18A*

10D

1518D

15D

128D

12D

126

*FIG. 18B*

10E

1518D

15D

128

12E

126E

*FIG. 19*

1518D

1519

128

12

126

15D

*FIG. 20A*

*FIG. 20B*

## FIG. 21

## FIG. 22

## INTERNATIONAL SEARCH REPORT

| International application No. |
|---|
| PCT/JP2009/065746 |

**A. CLASSIFICATION OF SUBJECT MATTER**
*G06K19/07*(2006.01)i, *G06K19/077*(2006.01)i, *G09F9/00*(2006.01)i, *H01M14/00*(2006.01)i

According to International Patent Classification (IPC) or to both national classification and IPC

**B. FIELDS SEARCHED**

Minimum documentation searched (classification system followed by classification symbols)
G06K19/07, G06K19/077, G09F9/00, H01M14/00

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2005-78370 A (NGK Spark Plug Co., Ltd.),<br>24 March 2005 (24.03.2005),<br>paragraphs [0012] to [0032]; fig. 1 to 13<br>(Family: none) | 1,2,4-6<br>3,7,8 |
| Y | JP 60-147719 A (Seiko Corp.),<br>03 August 1985 (03.08.1985),<br>page 1, right paragraph, line 6 to page 2,<br>right paragraph, line 5; fig. 1, 2<br>(Family: none) | 3 |
| Y | JP 2006-99781 A (SAP AG.),<br>13 April 2006 (13.04.2006),<br>paragraphs [0024], [0025]; fig. 8<br>& US 2006/65741 A1 & EP 1643464 A2 | 7,8 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 December, 2009 (02.12.09) | 15 December, 2009 (15.12.09) |

| Name and mailing address of the ISA/<br>Japanese Patent Office | Authorized officer |
|---|---|
| Facsimile No. | Telephone No. |

Form PCT/ISA/210 (second sheet) (April 2007)

## INTERNATIONAL SEARCH REPORT

International application No.

PCT/JP2009/065746

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
    The search made on claim 1 as "the first (main) group of inventions" shows that the technical feature of the main group of inventions is not novel since it is disclosed as a prior art in Document JP 2005-78370 A (NGK Spark Plug Co., Ltd.), 24 March 2005 (24.03.05), paragraphs [0012]-[0032], fig. 1-13. Accordingly, the technical feature of the main group of inventions cannot be "a special technical feature" within the meaning of PCT Rule 13.2, second sentence.

    (Continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-8

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

Form PCT/ISA/210 (continuation of first sheet (2)) (April 2007)

**INTERNATIONAL SEARCH REPORT**

International application No.

PCT/JP2009/065746

Continuation of Box No.III of continuation of first sheet(2)

The inventions of claims 9-12, 14 (second group of inventions) have "a special technical feature" relating to "forming an accumulator body as a photoelectric conversion body on a common base."

The invention of claim 13 (third group of inventions) relates to that "an antenna and a communication circuit formed on the base are made to be a reflector of the photoelectric conversion body."

There is no technical relationship between the second and the third group of inventions involving one or more of the same or corresponding special technical features.

Form PCT/ISA/210 (extra sheet) (April 2007)

44

**EP 2 330 539 A1**

**Patent documents cited in the description**

- JP 2004024551 A
- JP 2002032728 A

- JP 10240873 A

**Non-patent literature cited in the description**

- **Gratzel et al.** *Nature,* 24 October 1991, vol. 353, 737-740